Europäisches Patentamt

European Patent Office

Office européen des brevets

(11) Publication number: **0 497 283 A2**

# EUROPEAN PATENT APPLICATION

(21) Application number: **92101366.0**

(22) Date of filing: **28.01.92**

(51) Int. Cl.5: **G06F 15/20**

(30) Priority: **28.01.91 JP 26891/91**

(43) Date of publication of application:
**05.08.92 Bulletin 92/32**

(84) Designated Contracting States:
**DE FR GB**

(71) Applicant: **FUJITSU LIMITED**
**1015, Kamikodanaka Nakahara-ku**
**Kawasaki-shi Kanagawa 211(JP)**

(72) Inventor: **Uehara, Sanya**
**c/o Fujitsu Limited, 1015, Kamikodanaka**
**Nakahara-ku, Kawasaki-shi, Kanagawa,**
**211(JP)**

(74) Representative: **Schmidt-Evers, Jürgen,**
**Dipl.-Ing. et al**
**Patentanwälte Mitscherlich & Partner,**
**Steinsdorfstrasse 10**
**W-8000 München 22(DE)**

(54) **A document processor.**

(57) A document processor stores a plurality of generated documents in an actual file, associating any of the document sections with one another and displaying them, and editing the document sections. The present invention has a configuration in which a control means for managing, when a document to be displayed is generated by merging a plurality of document sections in one document, a name of a file in which the document is stored and the file area in which each document section is stored, and for managing, when a document to be displayed is generated by merging document sections in a plurality of documents, names of files in which the document sections are stored and the file area in which each document section is stored; and a display control means for merging and displaying the document sections on a display after reading the document sections to be displayed from the actual file according to the managing data of the managing means.

Fig. 3

Background of the Invention

The present invention relates to a document processor for generating and editing a document, and specifically to a document processor for automatically generating a new document by merging and citing the sections of different documents and for displaying editing information and comment information to be processed as the same process unit.

A plurality of documents may have to be simultaneously generated by a plurality of persons with the generated documents properly associated with one another. For example, in the process for developing a software, a plurality of programmers generate and edit a plurality of different documents. When a document processor is used by more than one user as described above, it processes more than one document and appropriately retains correspondence between them. Since a document is normally generated and edited according to the schedule of a job, the editing information must also be managed according to the same schedule.

A document processor processes a hyper-text (structured text). A hyper-text is different from a conventional one-dimensional document in that a part of a document, for example, a word, is associated with a different document, for example, a sentence for explaining the original word, and it can be displayed by a user in a specific operation. The structured document has a configuration such that a link is established to related documents enabling them to be called as necessary. The document processor is configured such that a document can be generated and edited efficiently by managing and processing it as a structured document and displaying a related document through a different window at a user's request.

In generating a document using a conventional document processor, a user is requested to segment the document and input correspondence information about its segmented parts. As one document is being processed in this case, the link information about related documents is registered to each of the segmented parts of the document according to the inputted correspondence information. That is, the document processor of the prior art technology manages link information about related parts corresponding to segmented parts of the same document.

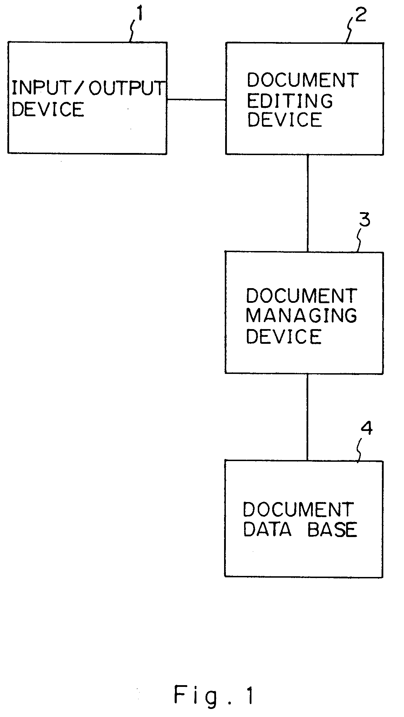

Figure 1 is a block diagram of a device of the prior art technology. With this device, a user operates an input/output device 1 and a document editing device 2 to edit a document. A document editing device 2 stores edited documents in its internal buffer during the editing operation. When the editing operation is completed, the document stored in the buffer is outputted to a document managing device 3. Then, the document is registered to a document data base 4 by the document managing device 3. If the document is edited again, the document editing device 2 is instructed through the input/output device 1 to read the document stored in the document data base 4. According to the instruction, the document editing device 2 reads the specified document stored in the document data base 4 through the document managing device 3 and stores the document in its buffer, thus enabling re-editing of the document.

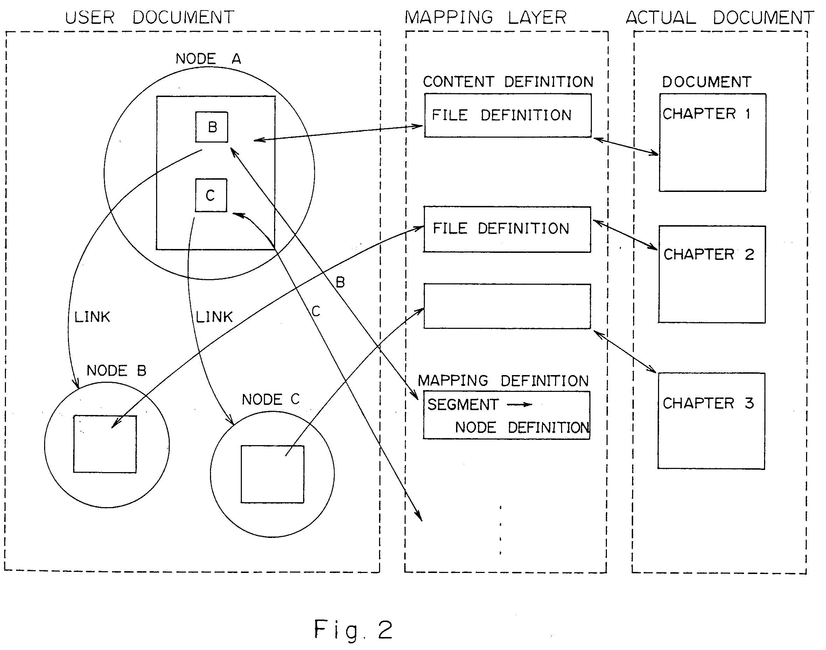

The above described document to be edited is segmented. For example, it is managed as a data base in chapter units. Figure 2 is a view for explaining how a user document is internally managed.
A user document refers to an area in node A as being linked to nodes B and C. These links are managed by the content definition and mapping definition in the mapping layer and associated with the actual document. For example, the actual document is segmented to Chapters 1, 2, 3, ... corresponding to a node. The text of each chapter is defined by the content definition in the mapping layer as corresponding to a specific area, for example, a segment. Thus, the document processor generates a user document and displays it on an input/output device.

Such documents as manuals, specifications, etc. are generated and edited by a plurality of authors. Besides, a plurality of rewriters work on the output of one author, each rewriter modifying the output or adding to it. Some writers give a comment that it must be modified somehow. For example, a book is normally checked by a plurality of checkers after it is completed. Thus, when a plurality of users generate and edit one original document, each of them may want to record editing information and add such comment information, or may want to add various comment information to the document corresponding to each document section such as directions for other users and comments on his (or her) own edition. However, the document processor of the prior art technology cannot add records of editing information and various comment information corresponding to the document sections being processed. Therefore, based on the above described background, users of the conventional document processor record each piece of editing information as an independent management unit without associating one piece with another, and also record each comment as an independent management unit without associating it with other comments. That is, the editing information is not managed as a series of related editing information segments to be processed in a specific editing operation but managed in independent editing operations. Likewise, a series of editing processes and comments are separately managed. The document processor of the prior art technology displays the editing information, that is, the difference information, in the usual display format or by including it in the original document.

A document may have to be generated or edited according to a data process result obtained by retrieving the same word within a document being generated using a retrieving program.

Since the conventional document processor processes a one document at a time, it processes a document using an appropriate program and the process result is displayed.

However, the conventional document processor for managing the link information about related document sections, that is, segmented parts forming a structured document, can manage the link information about the segments in the same document, but cannot manage the link information about the segments of other documents. Therefore, the conventional document processor cannot merge the sections of different documents or cite other documents to show on a display.

Additionally, as the conventional document processor is not provided with a plurality of entries for registering link information, a link-source document cannot be linked to a plurality of related documents. Besides, as it fixedly processes a link-destination document, a plurality of link-source documents cannot be linked separately to different partially duplicated documents. Furthermore, since the conventional document processor is not designed to specify a program as a link-destination, an appropriate program such as a retrieving program, etc. cannot be activated from a document in process. As described above, the conventional document processor for processing a structured document requests a user to input information used to generate a structured document, thus causing a problem that a user is charged with a bigger load.

The conventional document processor separately manages editing information and comments without associating them with others. Therefore, a series of related pieces of editing information or comments cannot be sequentially referred to, or an editing operation is not permitted to collectively restore related pieces of editing information to the original representation. The problem is serious because it is operationally inefficient in processing even a single document.

Moreover, the conventional document processor does not display editing information, that is, it does not explicitly display which part was modified, so it is very hard to identify the modified part of the document.

The conventional document processor processes one document at a time using a programming function, but cannot process a plurality of documents. Therefore, a user must activate a program by separately specifying a target document, thereby resulting in a terribly inefficient operation.

The document processor of the prior art technology cannot manage a series of related modifications covering a plurality of documents. Therefore, it cannot perform an editing operation such as making modifications as the first step and, after a review, adding information or restoring the original document. Specifically, after modifying a document, it cannot exactly indicate the modifications from the original document. Thus, it must locate the modifications while referring to the original document. Besides, the conventional document processor cannot edit documents such that different documents generated by a plurality of authors can be reviewed and merged with additional modifications or restored to original documents. Additionally, it cannot detect incompatible points among different documents either.

Summary of the Invention

An object of the present invention is to provide a new document processor for creating a new document by combining and citing the sections of different documents and for displaying editing information and comment information to be processed as the same process unit.

A feature of the present invention resides in a document processor for storing a plurality of generated documents in an actual file, associating any of said document sections with one another and displaying them, and editing said document sections, comprising; a control means for managing, when a document is generated by merging a plurality of document sections in one document, a name of a file in which said document is stored and the file area in which each document section is stored, and for managing, when a document is generated by merging document sections in a plurality of documents, names of files in which said document sections are stored and the file area in which each document section is stored; and a display control moans for merging and displaying said document sections on a display after reading said document sections to be displayed from said actual file according to the managing data of said managing means.

The present invention includes a managing means for virtually managing documents to be merged as one document and displayed on a display, and also virtually managing documents to be cited as related documents and displayed on a display. Then, the display control means displays these virtually managed documents.

Brief Description of the Drawings

Figure 1 is a block diagram for explaining the prior art technology;

Figure 2 is a view for explaining the file links in the prior art technology;

Figures 3 shows the first embodiment of the present invention;

Figure 4 shows the second embodiment of the present invention;

Figure 5 shows the third embodiment of the present invention;

Figure 6 shows the fourth embodiment of the configuration of the document processor of the present invention;

Figure 7 shows an embodiment of the managing data of virtual files;

Figure 8 is a process flowchart for explaining an automatic registration process for managing data of virtual files used in the structuring processor;

Figure 9 is a view for explaining an automatic generation of a structured document;

Figure 10 is a flowchart for explaining the operation of the virtual structure controller and the structuring controller;

Figure 11 is a flowchart for explaining the operation of the virtual file managing device;

Figure 12 is a flowchart for explaining the operation of the additional information managing device;

Figure 13 is a process flowchart for explaining the operation of the structuring processor ;

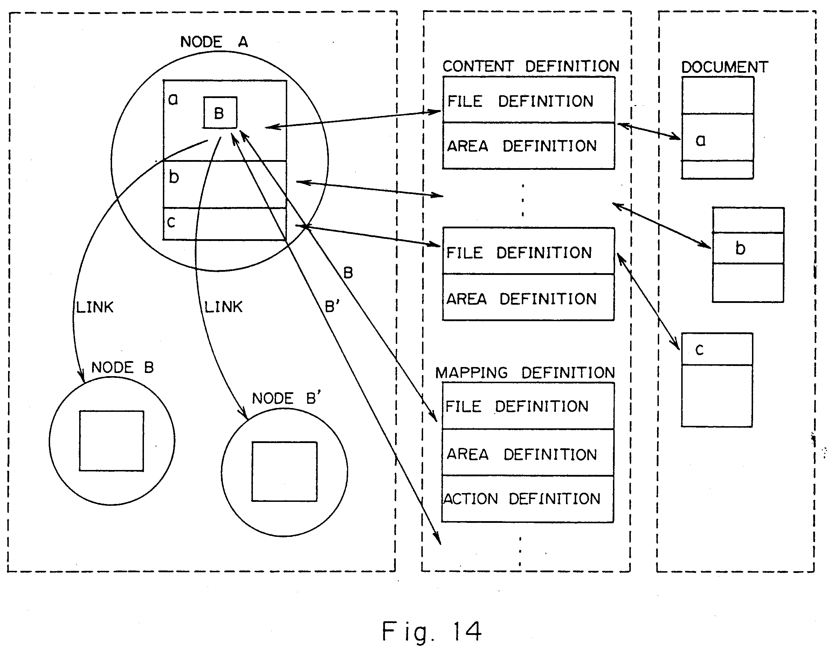

Figure 14 is a block diagram for explaining the display process of a structured document;

Figure 15 is a view for explaining the managing data of an additional information file;

Figures 16 and 17 are process flowcharts for explaining the operation of the additional information processor;

Figure 18 is a block diagram for explaining the managing format of an additional information cell;

Figures 19 and 20 are block diagrams for explaining the process of displaying editing information;

Figure 21 is a block diagram for explaining the process of a retrieval;

Figure 22 is a block diagram for explaining the fifth embodiment for specifying the present invention;

Figure 23 is a process flowchart for explaining the second embodiment for specifying the present invention;

Figure 24 is an example of a display of the present invention;

Figure 25 shows the configuration of the sixth embodiment for specifying the present invention;

Figure 26 is a process flowchart for explaining the operation of the present invention;

Figure 27 (Figs. 27A and 27B) is an embodiment of a display of the present invention;

Figure 28 is a flowchart for explaining a merging of a plurality of proposed modifications; and

Figure 29 is a flowchart for detecting an incompatible modification unit.

Description of the Preferred Embodiment

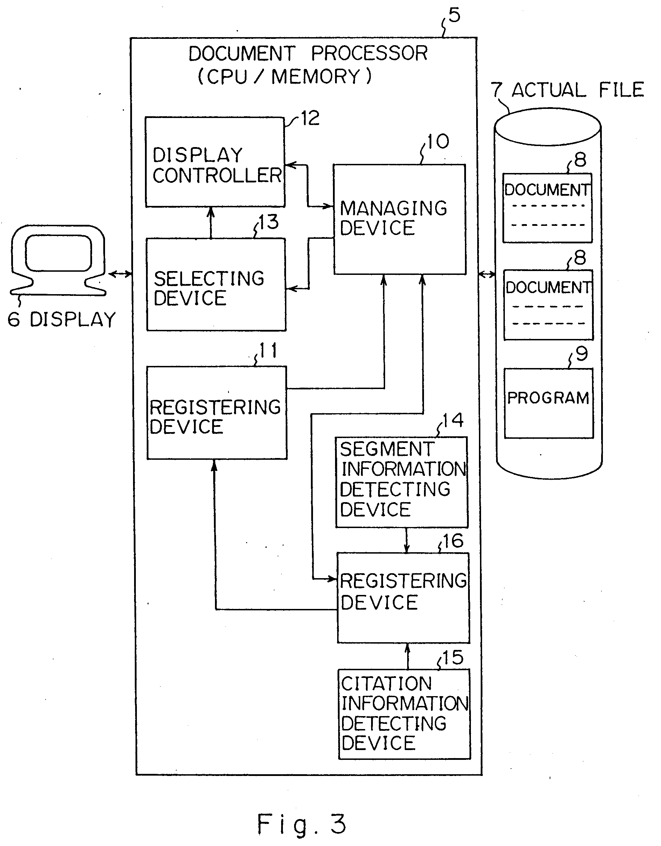

Figure 3 shows the configuration of the first embodiment of the present invention. As shown in Figure 3, the present invention comprises a document processor 5, a man-machine interface 6 for providing a communication between a user and a processor, and an actual file 7 for managing a document 8 and a program 9. The managing means 10 is provided in the document processor 1 corresponding to each display unit. When a document to be displayed is generated by merging the sections of a single document, the managing means 10 manages the name of the file in which the document is stored and the area information indicating where in the file each section is located. When a document to be displayed is generated by merging the sections of different documents, it manages the names of the files in which each document is stored and the area information indicating where in the file each section is located. When one or more documents are merged into a document to be displayed, the managing means 10 manages the relation between the name of the file in which a called document is stored and its file area information, and the identification name of a called document to be displayed. For example, the called document can be managed with a program name.

A first registering means 11 registers managing data to the managing means 10 through communication with a user. A display control means 12 reads a document to be displayed from the actual file 3 according to the managing data provided by the managing means 10 and displays the read document on the display 2. Selecting means 13 selects one or more calling documents managed by the managing means 10.

A segment information detecting means 14 detects the position of the description of a segmentation word indicating the segmentation of a document by analyzing a character, that is, by determining its code, in the document stored in the actual file 7. A citation information detecting means 15 detects the position of the description of a citation word indicating the citation to a document by analyzing a character in the document stored in the actual file 7. Registering means 16 notifies the registering means 11 of a document area segmented by the segmentation word detected by the segment information detecting means 14. The document area is informed as a document unit that can be registered to the managing means 10. Then, the registering means 16 registers to the managing means 10 the relation between the file name information indicating a file in which a citation word detected by the citation information detecting means 15 exists and the file area information and the identification name of the managing means 10 for managing the document specified by the citation word as a document to be displayed.

The managing means 10 virtually manages documents to be merged as one document and displayed on a display, and also virtually manages documents to be cited as related documents and displayed on a display. Then, the display control means 12 displays these virtually managed documents.

As described above, in the first embodiment of the present invention, all documents to be displayed are managed virtually. Therefore, each of the documents can be merged with other documents to merge and display a new document or can be cited and shown on a display. Based on the virtual management, the managing means 10 can determine a document to be displayed without limit, thereby solving the problem of the prior art technology that a plurality of sections in one document cannot be simultaneously referred to or partially duplicated documents cannot be used for merging a document or referred to. Furthermore, the managing means 10 can manage and call a program in place of related document information. Therefore, a program such as a retrieving program, etc. can be activated while a document is being processed.

In the first embodiment of the present invention, the segment information detecting means 14 automatically segments an existing document into a plurality of smaller units of a desirable size. A segmented document area is generated as a document unit which is registered to the managing means 10. The citation information detecting means 15 automatically extracts citation relation information described in an existing document, and registers the extracted citation relation information to the managing means 10. Thus, an existing document can be automatically structured.

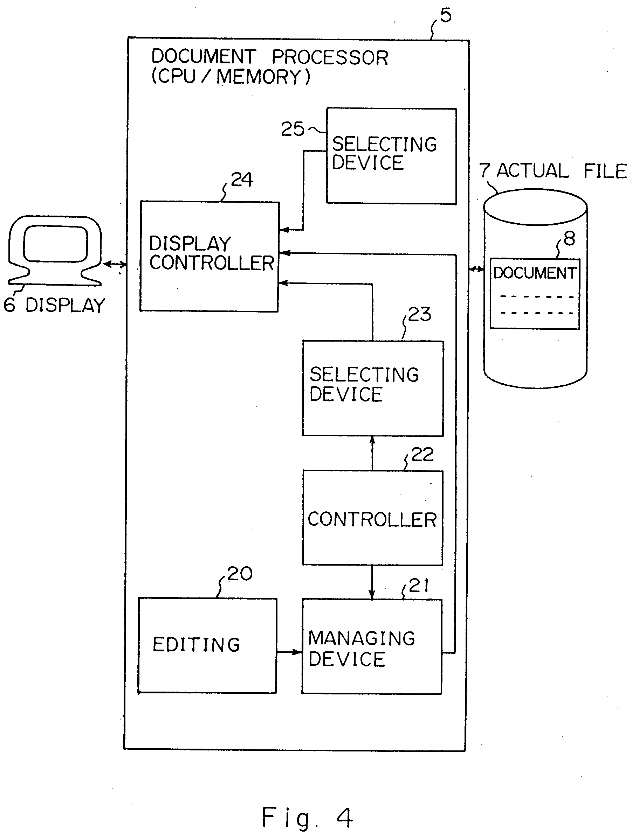

Figure 4 shows the configuration of the second embodiment of the present invention. In Figure 4, an editing means 20 edits an original document shown on a display 6 and receives memoranda added to the original document. One or more second managing means 21 are provided, which register and manage editing information about an original document and memoranda added to the original document together with memorandum position information.

A control means 22 establishes for an identical editing operation a link to the managing means 21 for registering and managing information, and assigns an editing identifier to each operation group. It also establishes for an identical memorandum adding operation a link to the managing means 21 for registering and managing information, and assigns a memorandum addition identifier to each operation group. The control means 22 groups managing means 21 before starting the editing or memorandum-adding operation when managing means 21 are specified and grouped in response to a user's designation of original documents to be processed in an identical operation before starting the editing or memorandum-adding operation. If a user specifies that the preceding operations are processed as an identical operation when the editing or memorandum-adding operation is completed, the managing means 21 are grouped on starting the operation and released at the end of the operation.

The selecting means 23 selects one or more identifiers from among the identifiers assigned by the control means 22 through communication with a user. A display control means 24 reads an original document to be displayed from the actual file 7, shows it on a display, reads editing information managed by the grouped managing means 21 in response to the command of the selecting means 23, and shows the edited document sections indicated by the editing information together with their original document sections. Furthermore, it reads memorandum information managed by the grouped managing means 21 and performs processes to show the memoranda specified by the read memorandum information together with its original document. The display control means 24 does not display edited documents as being included in the original documents, but displays them with both original documents and modifications. The third selecting means 25 instructs the display control means 24 through communication with a user which to show on a display: an original document or an edited document.

In the configuration of the second principle of the present invention, one or more managing means 21 for managing the editing information about document A and one or more managing means 21 for managing the editing information about document B manage the editing information in an identical editing operation according to the grouped processes performed by the control means 22. At this time, editing identifiers are simultaneously managed.

The managing means 21 for managing the editing information about document A and the second managing means 21 for managing the editing information about document B are identical and manage such that the identical editing information groups are processed. At this time, editing identifiers are simultaneously managed.

In response to the designation of a display request identifier after the above described managing processes, the display control means 24 sequentially shows on a display edited document sections indicated by the grouped editing information corresponding to their original document sections at a user's update request. Then, also at a user's update request, the second display control means 24 sequentially shows on a display memorandum specified by the grouped memorandum information corresponding to its original document. At this time the second display control means 24 displays the edited document together with both the original document and modifications as necessary.

As described above, according to the configuration of the second embodiment of the present invention, a series of related pieces of editing information and comments can be sequentially referred to, and related editing information groups can be collectively restored to the original representation. The selecting means 25 can alternately display the original document and the edited document. It also displays an edited document together with both original document and modifications. Therefore, a user can confirm edited portions of the edited document correctly.

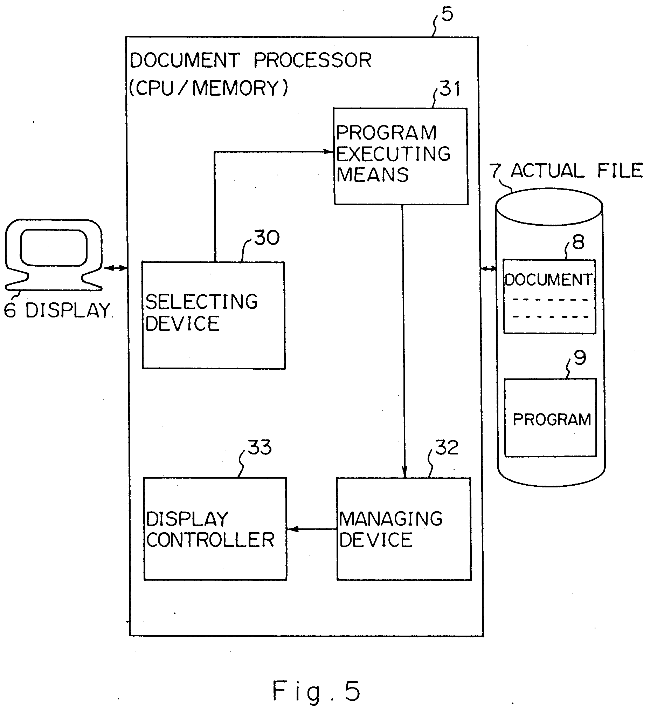

Figure 5 shows a configuration of the third embodiment for specifying the present invention.

A selecting means 30 selects a plurality of documents whose data should be processed by a program such as a retrieving program, etc. through communication with a user. A program executing means 31 reads a program to be activated from the actual file 7 and a plurality of documents selected by the selecting means 30 from the actual file 7, and uses these read documents in a process. One or more managing means 32 are provided corresponding to each document to be processed. They are registered and managed corresponding to each document the data process result information provided by the program executing means 31. A display control means 33 shows on a display corresponding to a document read from the actual file 7 the data process result information managed by the managing means 32.

In the present invention, the selecting means 30 selects a plurality of documents as documents to be processed by a program. The program executing means 31 operates a program using a plurality of the selected documents to be processed and registers the data process result information to the managing means 32 provided corresponding to each selected document. The display control means 33 shows on a display corresponding to each document read from the actual file 3 the data process result information registered to the managing means 32.

As described above, according to the third embodiment of the present invention, a plurality of documents can be specified to be processed by a program, and the data process result information can be displayed corresponding to each document, thus eliminating process steps of separately specifying each document to be processed and activating a required program as in the prior art technology.

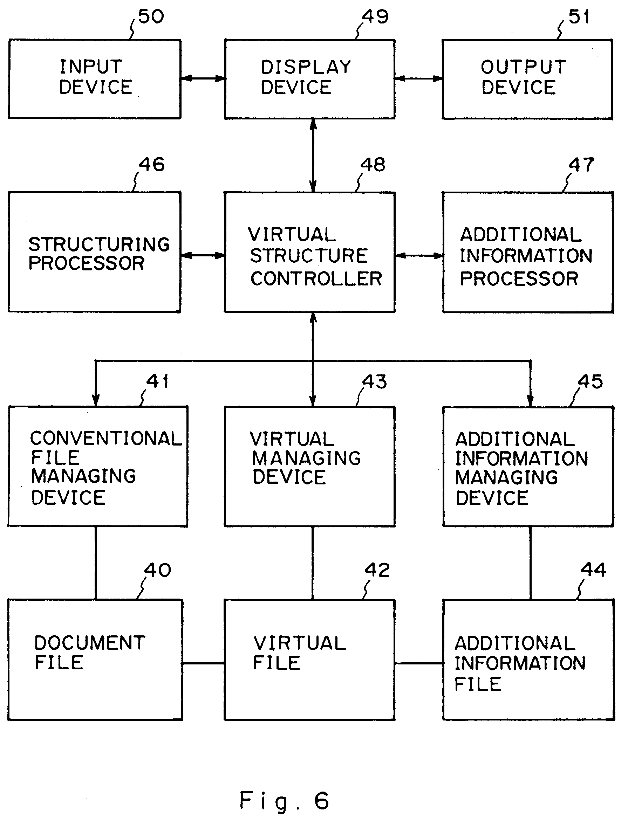

Figure 6 shows a detailed configuration of the fourth embodiment for the document processor associated with the present invention. In Figure 6, 40 is a document file for storing a document; 41 is a conventional file managing device for managing a document file 40; 42 is a virtual file for managing the content definition and the mapping definition of a document to be displayed; 43 is a virtual file managing device for managing the virtual file 42; 44 is an additional information file for managing an additional information cell describing editing information and memorandum information related to a document to be displayed; 45 is an additional information managing device for managing the additional information file 44; 46 is a structuring processor for realizing the virtual mechanism of the present invention according to the managing data provided by the virtual file 42; 47 is an additional information processor for realizing an additional information definition mechanism of the present invention according to the managing data provided by the additional information file 44; 48 is a virtual structure controller for controlling the whole system; 49 is a display device for displaying a document; 50 is an input device such as a key-board, mouse, etc.; and 51 is an output device such as a printer, etc.

First, the virtual mechanism of the structuring processor 46 is described as follows.

The content definition stored by the virtual file 42 defines the document information about a document to be displayed and provided in a display unit called a node. The content definition comprises a file definition referring to the name of a file containing a document to be displayed and stored in the document file 40 and an area definition indicating where in the file the target document is located.

A plurality of content definitions can be provided for a single node, thereby generating a document by merging a plurality of documents. The virtual file 42 is provided separately from the document file 40, and each node can set a document to be displayed as a merged document of different documents as well as of different sections in a single document. As each node can define an area definition independent of other nodes, partially duplicated areas can be set as a document section to be displayed.

A mapping definition stored in the virtual file 42 defines document information to be cited and displayed as a related document, defines it in node units like the content definition, and comprises the correspondence between the "file definition" and "area definition" of a calling document and the "action definition" of a called document. The "action definition" is normally defined by the node name of a node for managing related documents to be called, but can also be defined by a program name. Thus, a program is set to be activated. Each node can manage a plurality of "action definitions" for one calling document, thereby citing and displaying different related documents from one document. Accordingly, different programs can be activated from one document. When a plurality of "action definitions" are set, a menu is presented on a display according to which a user selects desired items.

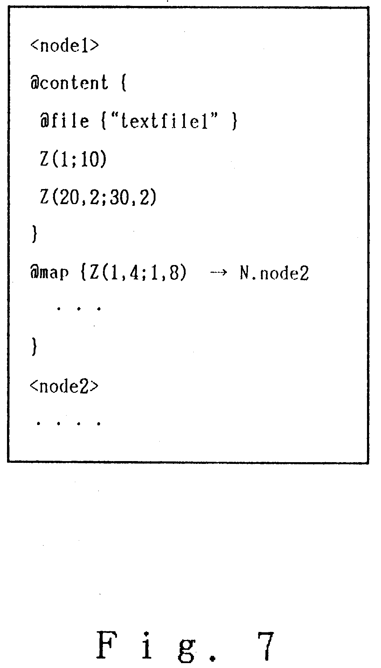

Figure 7 is a view for explaining an embodiment of a "content definition" and a "mapping definition" stored in the virtual file 42. "Node 1" is the "content definition" generated in "@content {...}" and defines a merged document as a document to be displayed, the merged document being merged from a document section from the first to the tenth line of a file "textfile 1" and a document section from the second character in the 20th line to the second character in the 30th line. When the document section from the 4th character in the first line to the 8th character in the first line in the file "textfile 1" is selected as a "mapping definition" generated in "@map {...}", a document which is defined to be displayed by "node 2" is defined as a document to be cited and displayed. As shown in Figure 5, the virtual file 42 sequentially stores nodes according to the ascending order "node 1", "node 2", ...

A node to be stored by the virtual file 42 is fundamentally generated according to the communication with a user. Actually, the structuring processor 46 communicates with a user to set a "content definition" and a "mapping definition" for each node and registers them to the virtual file 42. In this case, there is a problem that generating a node with a structured processor charges a user with a considerable load. Specifically, when a number of existing documents must be structured as described above, the load will be exceedingly large. Therefore, the structuring processor 46 automatically generates a node from an existing document and automatically sets a "content definition" and a "mapping definition" for the generated node.

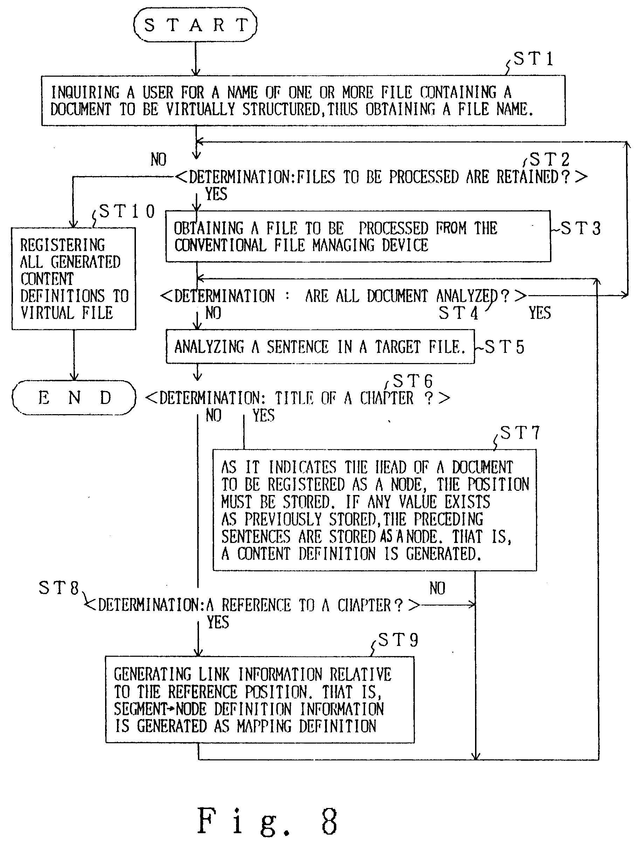

Figure 8 is a flowchart for explaining an automatic registration for managing data with the structuring processor 46 to a virtual file. When an automatic registration starts, a user is inquired in step ST 1 about the file name in the document to be virtually structured. The file name of the document is thus obtained from a user. Then, in step ST 2, determination is made as to whether or not a target file exists. If the determination is made immediately after a file name of a document is inputted in step ST 1, a specified target file possibly exists. Thus, the determination indicates "yes". If yes, a file is specified in step ST 3 among a plurality of the files specified in step ST 1, and read by the conventional file managing device 41. The conventional file managing device 41 is connected to the document file 40 which stores the above described specified file. The conventional file managing device 41 reads the specified file and applies it to the structuring processor 46 through the virtual structure controller 48.

After step ST 3, determination is made in step ST 4 as to whether or not the analysis of all document sections is completed. Immediately after a target file is read in step ST 3, the determination indicates "no". Thus an unprocessed section in a target file is analyzed in step ST 5. The analysis is sequentially repeated as long as unprocessed sections remain in the target file in the procedures described later. A document section is analyzed starting with its head. After step ST 4, determination is made as to whether or not a document section indicates a title of a chapter. In the embodiment of the present invention, a chapter is structured corresponding to a node. If a document section indicates a title of a chapter (yes), it indicates a start of a document, and its position is recorded in step ST 7. If any previous records exist, all the previous document sections are recorded as the "content definition" information about the previous node. For example, the position information about the character immediately before the title of a chapter is set in the "content definition" of a node generated at the previous detecting operation. Then, a node is generated in which to set a file name and a node name. The "content definition" of the node also contains the position information about its title characters. In step ST 7, a "content definition" of one node is established.

If the determination indicates that a document section does not indicate the title of a chapter (no) in step ST 6, determination is made as to whether or not the document section indicates the reference to the chapter. If so (yes), link information is generated to contain the indicated position as a reference position. That is, node definition information is presented as the "mapping definition" information to indicate the segmentation of a document. For example, a detected reference position of a chapter and the name of a node for managing a document to be displayed as specified by the reference to the chapter are included in a pair in the "mapping definition".

When a document section does not indicate a reference to a chapter (no) in step ST 8 or when the processes in steps ST 7 and 9 are completed, control is returned to step ST 4. By sequentially repeating the processes in steps ST 4 to ST 9, document sections in conventional files can be structured in the format of a virtual structure file.

After a specified file is processed, the determination indicates the completion of analysis (yes). Then, the operation is restarted from step ST 2. When a plurality of files are specified, the determination indicates no target files (no) by repeating the processes starting from step ST 2 for the specified number of files. In this case, all the generated "content definitions" are registered to a virtual file in step ST 10. All the generated "content definitions" are outputted to the virtual file managing device 43 through the virtual structure controller 48. Then, the virtual file managing device 43 stores the "content definition" to the virtual file 42. Thus, the automatic registration is completed.

Thus, the structuring processor 46 automatically structures an existing document to register the structure information to the virtual file 42. In the process flow shown in Figure 8, a document is structured according to a character string such as a "chapter" and a "reference to a chapter". However, it is only an example. It is obvious that one node can be assigned to a "content" by defining the character string "content" as a character string to be structured.

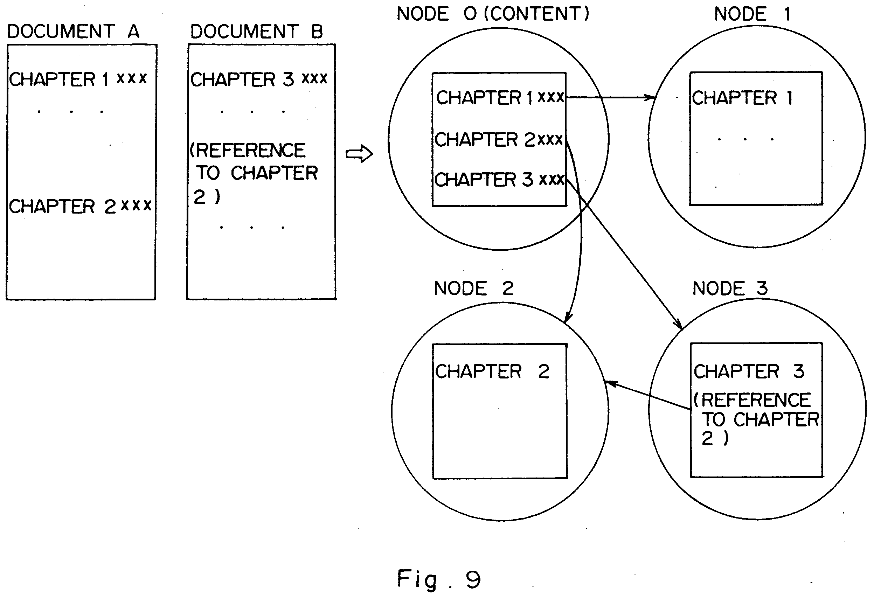

Figure 9 is a view for explaining an automatic generation of a structured document when documents A and B are specified in step ST 1 shown in Figure 8.

Document A contains the text of Chapters 1 and 2, document B contains the text of Chapter 3, and the text of Chapter 3 contains the reference to Chapter 2. If an automatic generation is performed in this case, a "content definition" is generated with a content assigned to node 0, Chapter 1 to node 1, Chapter 2 to node 2, and Chapter 3 to node 3. Furthermore, in Chapter 3, a mapping definition for referring to Chapter 2 is generated. Figure 9 shows the content as a target to be structured.

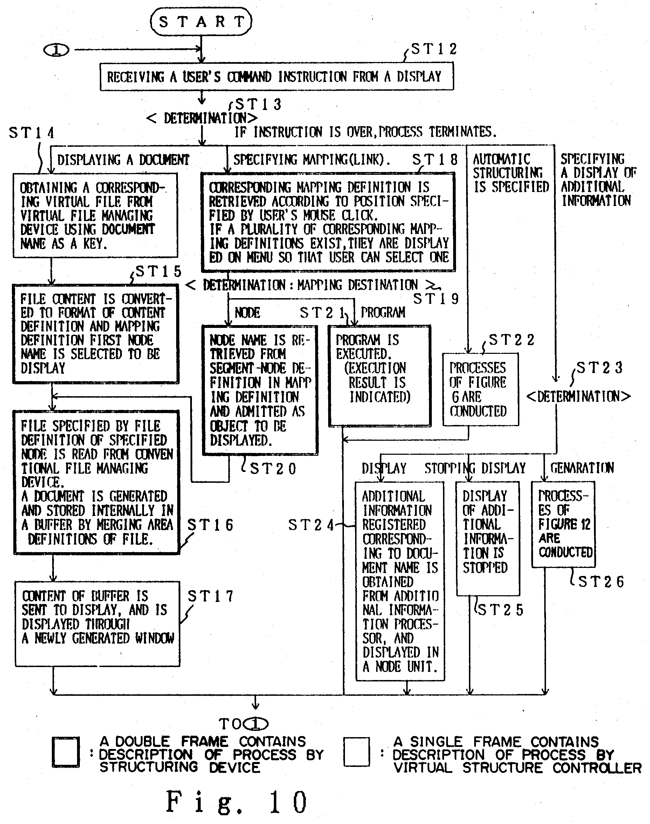

Next, the whole operation is described as follows. The processes by the structuring processor 46 for an automatically registering operation and by each device are controlled by the virtual structure controller 48. Figure 10 is a process flowchart of the virtual structure controller 48 and the structuring processor 46. In Figure 10, a double frame contains a process by the structuring processor 46 and a single frame contains a process by the virtual structure controller 48.

When a process is started, a user's command specifies an action through the display device 49 in step ST 12. When no user' s commands are issued through the display device 49, control remains in step ST 12 until an action is specified by a user's command.

The display device 49 is connected to an output device comprising a CRT, etc. and an input device 50 comprising a mouse, key-board, etc. The display device 49 controls of displaying a command menu of basic commands to the output device 51 and operates a mouse such that a result of selecting a command, i.e. a target command, on the displayed menu is displayed. When a mouse key is clicked for a target command, the command is outputted to the virtual structure controller 48. The display device 49 works according to a display request and a prompt issue as instructed by the virtual structure controller 48. When a display request is issued, display data applied by the virtual structure controller 48 are displayed on the output device 51. When a prompt is issued, a user operates the input device 50 to input operation data which are outputted to the virtual structure controller 48.

Refer to Figure 10 again. When an instruction is received through a user's command in step ST 12, determination is made as to what is requested by the command in step ST 13. If the command requests a display of a document, a corresponding virtual file can be specified by the virtual file managing device 43 using a document name as a key in step ST 14. The operation of the virtual file managing device 43 is described later. The virtual structure controller 48 controls the structuring processor 46, in step ST 15. First, in step ST 18, a "mapping definition" is retrieved according to the position where a mouse is clicked by a user. When a plurality of mapping definitions exist, they are displayed on a menu such that the user can select from among them. According to the content of the virtual file, it is stored in the format of the"content definition" and "mapping definition", and the first node is selected to be displayed. Then, in step ST 16, a file specified by the "file definition" in the "content definition" of a node to be displayed is read from the document file 40 through the conventional file managing device 41. According to the "area definition", a portion of the read file, that is, a document, is merged with another portion and stored in the internal buffer of the virtual structure controller 48. Then, in step ST 17, the content of the internal buffer to be displayed is outputted to the display device, and the display device 49 generates a new window through which the output is displayed. A command to display a document is executed in the above described steps ST 14 to 17.

When determination indicates a "mapping" (link) in step ST 13, the structuring processor 46 is controlled. Another determination is made in step ST 19 as to which is specified as a mapping destination after the command: a node or a program. If a node is specified, in step ST 20, it is extracted as specified corresponding to a segment in the mapping definition. For example, z(1,4; 1,8) - N.node2 implies the name of a node to be displayed. According to the steps ST 16 and ST 17, the node of the segment in the process of a mapping definition is displayed.

When a program is specified as a mapping destination according to the determination in step ST 19, the specified program is executed in step ST 21. The result of the program is stored by the internal buffer of the virtual structure controller 48 and then displayed.

If an automatic structure is specified by the determination in step ST 13, the structuring processor 46 is controlled in step ST 22 to execute the process shown in Figure 8 described above.

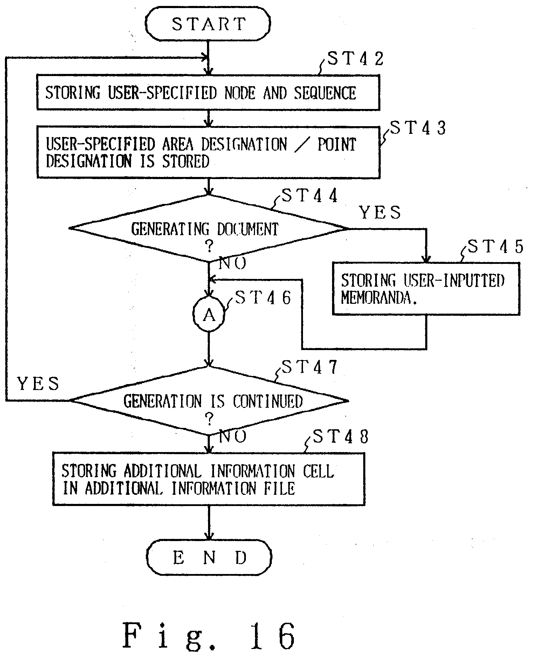

If the determination in step ST 13 requests a display of additional information, another determination is made as to which to require by the instruction after the command: displaying additional information, stopping a display, or generating additional information in step ST 23 If the determination requests "displaying", the additional information registered corresponding to its document name is obtained from the additional information processor 47 in step ST 24 and then displayed for each node. If the determination requests "stopping a display", the additional information for each node is removed from the display in step ST 25. If the determination requests "generating additional information", the processes of the additional information processor 47 shown in Figure 16 are controlled in step ST 26. The process of additional information is described later in detail.

Figure 11 is a flowchart for explaining the operation of the virtual file managing device 43. The virtual file managing device 43 is connected to a virtual file 42 and registers and retrieves the files provided by the virtual structure controller 48. When an operational instruction is applied by the structuring processor 46 through the virtual structure controller 48, the processes shown in the operational flowchart shown in Figure 11 are started. First, determination is made as to whether or not an operational instruction inputted in step ST 28 is retrieving a file or registering a file. If it indicates retrieving a file, the structuring processor specifies a document name through the virtual structure controller, and a file corresponding to the specified document name such as a file shown in Figure 7 is retrieved, read, and outputted to the structuring processor 46 through the virtual structure controller 48. Then, the processes specified by the instruction are performed.

If the instruction of the structuring processor 46 indicates registering a file, a file specified by the structuring processor 46 through the virtual structure controller 48 and shown in Figure 7 is registered corresponding to a document name specified by the virtual file 42. Then, the processes specified by the instruction are performed. That is, the virtual file managing device accesses a virtual file.

Figure 12 is a flowchart for explaining the operation of the additional information managing device 47. In step ST 31, an instruction is obtained from the additional information managing device 47 through the virtual structure controller 48. Then, a file is retrieved in step ST 32 and it is registered in step ST 33. The additional information managing device 47 manages the additional information file 44 for storing additional information, and it operates in the same manner as the virtual file managing device 43 except that it processes different information from that processed by the access requester.

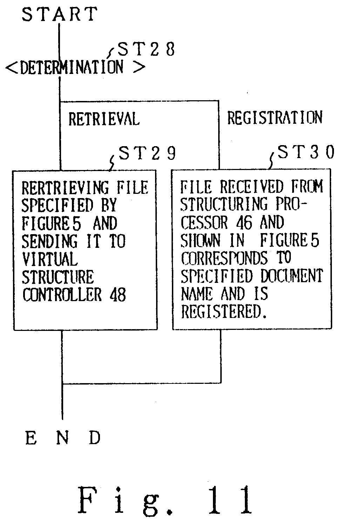

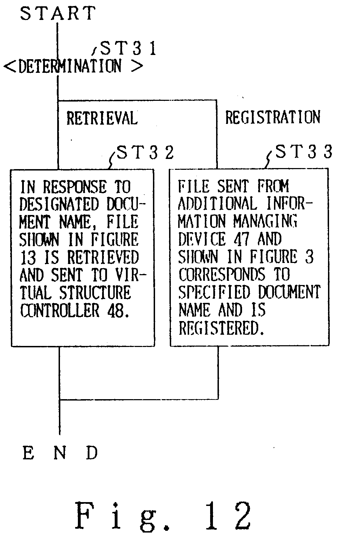

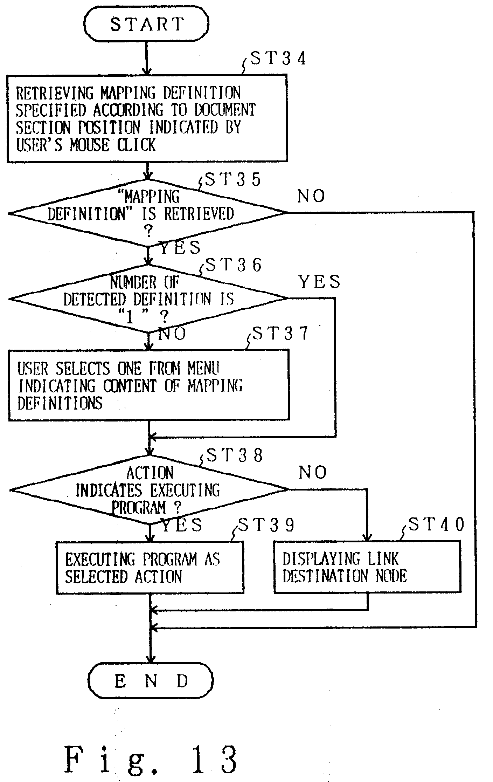

Figure 13 is a flowchart for citing and displaying related documents by the structuring processor 46. The structuring processor 46 executes a process flow shown in Figure 13 when an instruction to cite and display related documents (or possibly an instruction to activate a program) is issued. The execution is instructed by the virtual structure controller 48. First, in step ST 34, the user specified mapping definition is retrieved according to the document position specified by the mouse click. The document displayed according to the document display command shown in Figure 10 is specified with a mouse cursor. A mouse switch is clicked with the document specified. Thus, the document position information is applied to the structuring processor 46 through the virtual structure controller 48 to execute a retrieval. In step ST 35, if a determination indicates that the "mapping definition" is successfully retrieved, another determination is made in step ST 36 as to which is to be set at the user-defined document position, one or more "mapping definitions". If a plurality of mapping definitions are set, in step ST 37, the contents of the mapping definitions are displayed according to the menu and the user is requested to select one of the mapping definitions. A mapping definition is selected by displaying the names of a plurality of mapping definitions on the output device 51 through the virtual structure controller 46 and the display device 49 and then specifying one mapping definition with a mouse cursor. If one mapping definition is retrieved, the selection is not required and the process in step ST 33 is skipped. Then, in step ST 38, a determination is made as to which to manage by the "action definition" of the user-specified "mapping definition": a program name or a node name. If the determination indicates a program name, control is passed to step ST 39 and the indicated program is activated. If the determination indicates a node name, control is passed to step ST 40 to establish a multi-window through which the document information indicated by the "content definition" of the specified node is displayed as a related document.

Thus, as shown in Figure 12, a document to be displayed can be virtually managed according to the "content definition" and "mapping definition" managed by the virtual file 42. Therefore, the structuring processor 46 can merge different documents to be shown on a display and cite a different document to be shown on a display. According to the virtual management, a user can select without limit a document to be displayed and can also activate a program.

Next, the additional information definition mechanism realized by the additional information processor 47 of the present invention is described below.

The additional information file 44 stores an additional information cell. The additional information cell is provided in a node unit, and records editing information and memoranda generated for a node-specified document to be displayed. If the editing information and memoranda are provided according to a series of processes (possibly covering a plurality of documents), the file is configured in the order of the documents used in the series of processes.

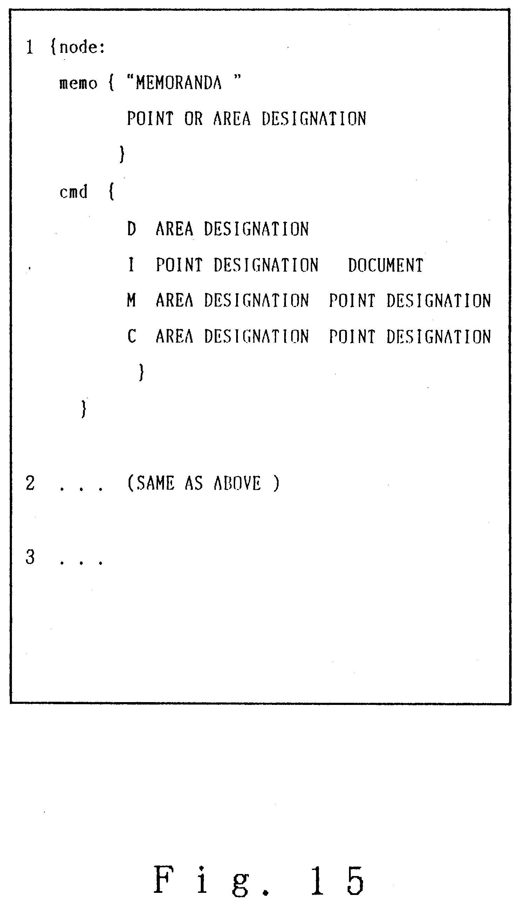

Figure 15 is a view for explaining an embodiment of an additional information cell managed by the additional information file 44. In Figure 15,"1" is an identifier for identifying a series of processes. That is, it is an ordinal number which is referred to as described later when a modified content and a memorandum can be obtained. A user-inputted memorandum and its position information are registered to the portion indicated by "memo {...}." User-inputted editing information, that is, a "memorandum" is registered to the portion indicated by "cmd{...}." After a memorandum, a point or area designation is given to indicate where in the original document the memorandum is related. When a part of an original document is deleted in the editing process, the document area information indicating the deleted portion (from the starting character in the starting line to the ending character in the ending line) is registered in the "D area designation format". When a specific document is inserted to an original document, document area information about an insertion point and a document to be inserted are registered in the "I point designation/document format". When a part of an original document is moved, document area information about a document to be moved and document area information about a moved-to position are registered in the "M area designation/point designation" format. When a part of an original document is copied, document area information about a document to be copied and document area information about its destination are registered in the "C area designation/point designation" format in the order they are edited. According to the registered data, an additional information cell records editing information and memoranda generated for a node-specified document to be displayed. If editing processes are operated for a document to be displayed for a plurality of nodes by executing a series of processes identified by the identifier "1", all these nodes are managed in series under the identifier "1".

The above described "point designation" designates one point in a document, specifying a line and a character position in the line, that is, an insertion position, by giving the value P (line number, character number). The "area designation" designates a part of a document by giving the value z (line number, character number; line number, character number) where the values before the semicolon indicate a starting point and the values after the semicolon indicate an ending point. If a character number is omitted, it indicates the head of the line for the starting point and the end of the line for the ending point.

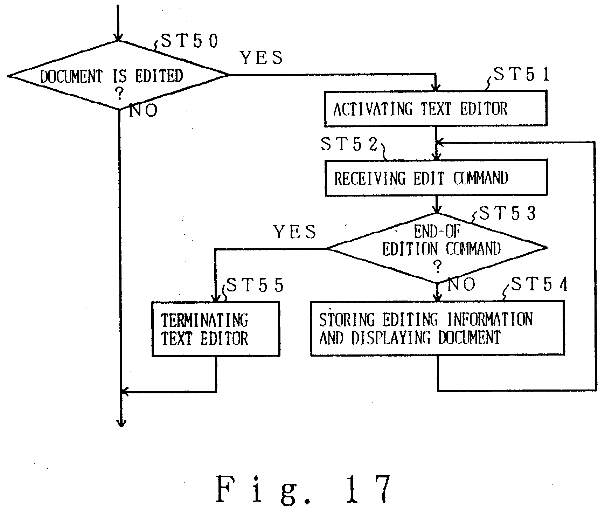

Next, the document processing procedure of the additional information processor 47 executed using the managing data in the additional information file 44 is described according to the process flow shown in Figures 16 and 17.

When a user instruction to generate additional information according to a menu is received through the input device 50, the display device 49, and the virtual structure controller 48, the additional information processor performs the processes indicated in the process flowchart shown in Figure 16. First, a user-specified node is read from the virtual file 42 in step ST 42, and a document specified by the "content definition" of the node is shown on a display. Then, the order of user-specified nodes is retained. A read node is not limited as being included within one document, but can refer to a plurality of documents. For example, it indicates a node name immediately after the node shown in Figure 15. An ordinal number of each node is shown by its leftmost number in Figure 13. Then in step ST 43, an area designation or point designation of a user-specified document is retained. For example, it indicates a point designation and area designation after the memorandum shown in Figure 13. Then, in step ST 44,determination is made as to whether or not the user has specified "generating a memorandum" on the menu. If the user has specified the "generating a memorandum", control is passed to step ST 45 to store in a corresponding additional information cell the user-inputted memorandum and its display position information. If no generate commands are issued, control is passed to step ST 46, and the editing processes shown in Figure 17 are performed.

Figure 17 is a detailed process flowchart for explaining the document processing operation performed by the additional information processor 47 in step ST 46. The additional information processor 47 determines in step ST 50 whether or not a user has specified "editing document" on the menu. If yes, control is passed to step ST 51 to activate a text editor. In step ST 52, it communicates with the user according to the activated text editor. An edit command can be accepted through communication with a user. Then, in step ST 53, the accepted command is checked to determine whether or not it is one to end an editing operation. If not, control is passed to step ST 54 to retain the user-inputted editing information in the corresponding additional information cell, and display it on a display (displayed in the display format described later). Then, control is returned to step ST 52 to continue the editing operation. Then, in step ST 53, if a user-inputted edit command is determined to be one to terminate an editing operation, control is passed to step ST 55 to terminate the text editor and the editing operation and perform the processes in step ST 47 as indicated by the process flow shown in Figure 16. If the user is not determined in step ST 50 to specify the "editing a document", control is passed to the processes in step ST 47.

In step ST 47, determination is made as to whether or not the user specifies "continuing generating memoranda." If yes, control is returned to step ST 42 to continue generating a memorandum and editing the document.

When the memorandum generation and the document editing process are continued, a link is established between additional information cells for retaining editing information and a memorandum to assign an additional information number, thereby grouping editing information and memoranda which are processed by an identical operation. In step ST 47, if the determination indicates that the user does not specify the "continuing generating memoranda", control is passed to step ST 48 to determine whether or not the user specifies on the menu "terminating additional information generation". If yes, a specific identifier is assigned to each group of additional information cells in step ST 46 and stored in the additional information file 44, thus terminating the process. If no, the process is terminated immediately.

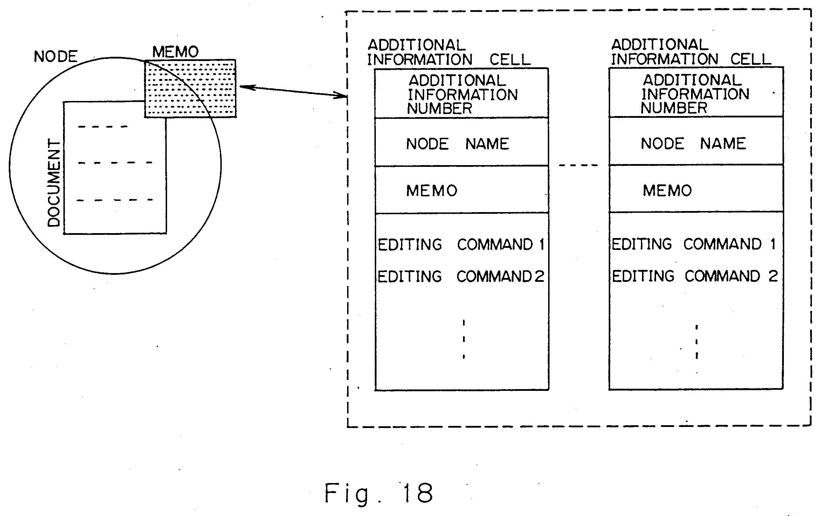

Thus, the additional information processor 47 sets as shown in Figure 18 to a corresponding additional information cell the editing information and memorandum for a document to be displayed which is provided according to an identical operation. Then, the cells are grouped and managed.

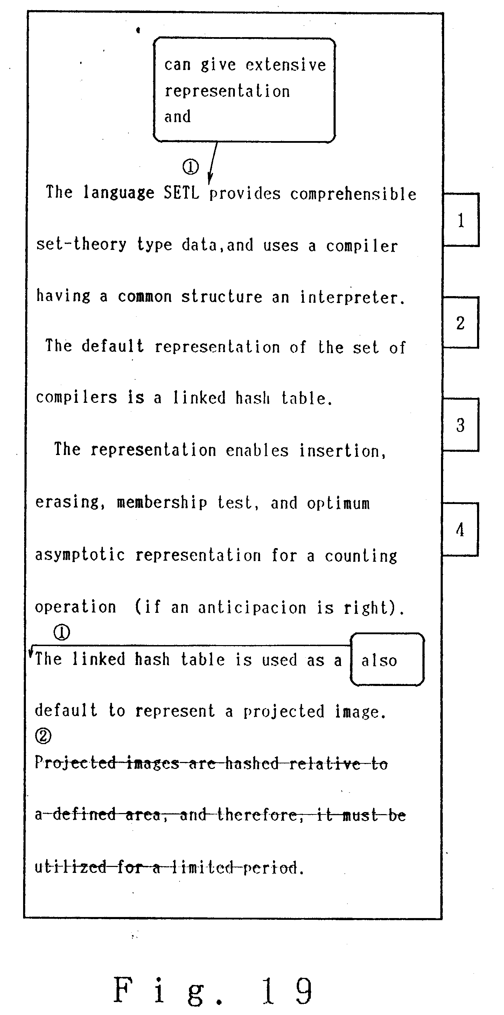

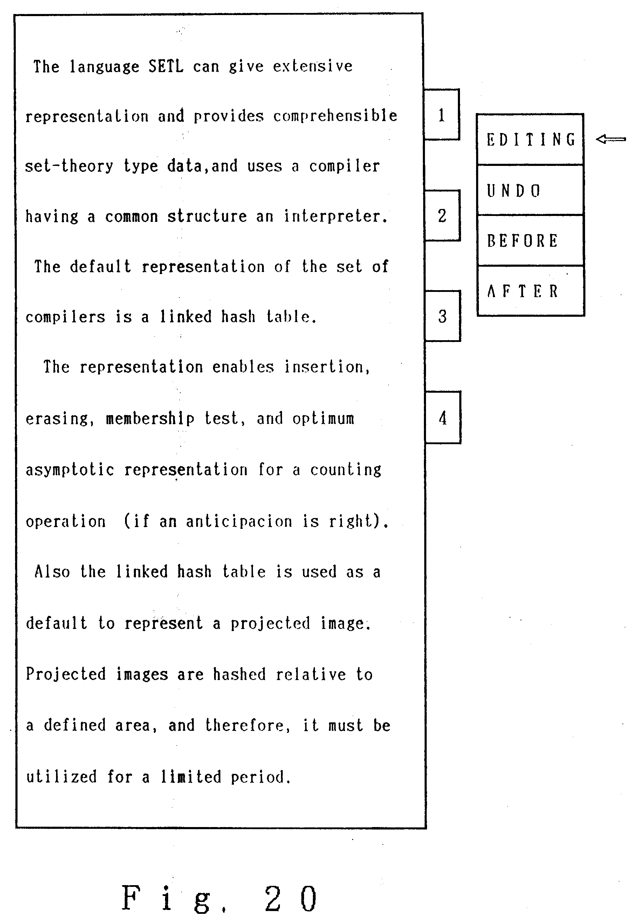

If they are displayed according to the contents of the additional information file generated by the additional information processor 47, the virtual structure controller 48 reads from the additional information file 44 an additional information cell corresponding to a node of a document to be displayed in step ST 25. Then, the editing information managed by the read additional information cell is associated with a document to be displayed, and then shown on the display, that is, the output device 51. The editing information is displayed with both original document and modifications displayed as shown in Figure 19. That is, when the editing information referred to by the editing number 1 is requested to be displayed, the inserting information indicated by 1 shown in Figure 19 and the moving information are displayed as if they were manually given. When the editing information referred to by the editing number 2 is requested to be displayed, the erasing information indicated by 2 shown in Figure 19 is displayed as if it were manually given. Editing information about a plurality of editing operations referred to by numbers such as editing numbers 1 and 2 can also be displayed. To enable selection of an original document, a menu can be displayed as shown in Figure 20. When a user selects "editing operation" on the menu, an edited document is displayed, while an unedited document is displayed when the user selects "UNDO" on the menu. In Figure 20, the edited document is displayed with the editing information included. However, as shown in Figure 19, editing information can be displayed with both the original document and the modifications.

As described above, the editing information is displayed by the virtual structure controller 48 according to a user such that editing information provided in a series of editing operations is sequentially shown on a display. The information is displayed according to the menu as shown in Figure 20. On the menu, a user can select "following information" to display the editing information provided for a document to be displayed in the next node. The user can select "previous information" to display the editing information provided for a document to be displayed in the previous node. According to the displaying operation, the user can read all the editing information provided for one or more documents.

A memorandum generated according to an identical process for a document to be displayed can be displayed. That is, when the virtual structure controller 48 receives from a user through the input device 50 and display device 49 an instruction to display a series of these memoranda, it reads from the additional information file 44 through the addition 1 information managing device 45 an additional information cell corresponding to a node for a document to be displayed. The memorandum specified by the read additional information cell is displayed at the specified position. Likewise, according to a user's instruction, memoranda provided in a series of processes are sequentially shown on a display.

Thus, a series of related editing information and memoranda can be sequentially referred to, and all the related editing information can be collectively restored. Furthermore, documents before and after editing operations can be alternately displayed, and the edited documents can be displayed thereby allowing a user to recognize an edited document with both original document and modifications displayed exactly.

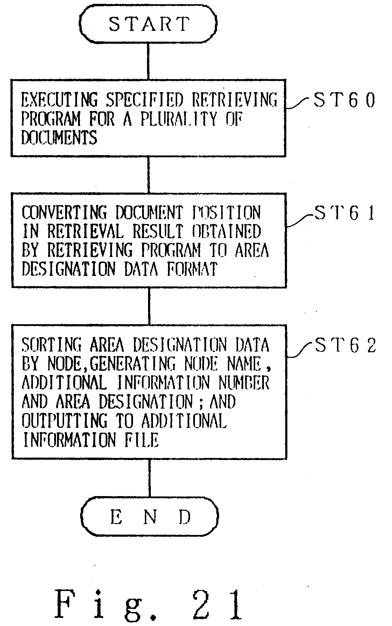

As shown in Figure 13, the technology of the present invention executes a program action 7 such as a retrieving program and processes a plurality of documents. The data process result information is registered to an additional information cell controlled by the additional information processor 47 and managed by it. That is, as shown by the process flow in Figure 21, when a retrieving program is activated in step ST 60 to process a plurality of user-specified documents, the additional information processor 47 converts the document position retrieved by the retrieving program to the area designation data format applicable to an additional information cell in step ST 61. In step ST 62, the area designation data are sorted corresponding to a node. A node name, additional information number, and area designation are generated for each area designation corresponding to each retrieval result, registered to an additional information cell, and stored in the additional information file 44.

The retrieval result of the retrieving program is displayed in the same way as displaying a memorandum. That is, when a user issues an instruction to display a series of retrieval results, the virtual structure controller 48 reads from the additional information file 44 an additional information cell corresponding to a node of a document to be displayed, and displays the retrieval result managed by the read additional information cell at the specified position. Then, according to a user's instruction, the retrieval results of a series of retrieving operations are sequentially shown on a display.

As described above, since the present invention virtually manages a document to be displayed, it merges different documents, shows them on a display, and cites other documents on the display. Furthermore, according to the virtual management, a document to be displayed can be set without limit, thus solving the problem of the prior art technology that a plurality of documents cannot be referred to from the document in which they are contained, or that partially duplicated document sections cannot be merged or referred to. Besides, in the present invention, a program such as a retrieving program can be activated from a document in process.

In the present invention, an existing document is automatically segmented to a desirable size, and citation information given in the existing document can be automatically extracted to automatically structure the existing document. Therefore, the present invention enables the above described virtual management.

In the present invention, a series of related pieces of editing information and comments are sequentially referred to, and the documents before and after editing operations can be alternately displayed. Besides, an edited document can be displayed with both the original document and the modifications, thus allowing a user to exactly recognize edited portions.

Furthermore, in the present invention, a plurality of documents can be specified to be processed by a program, and the data process result information can be displayed corresponding to each document. Therefore, a user does not have to separately activate a program for each document to be processed.

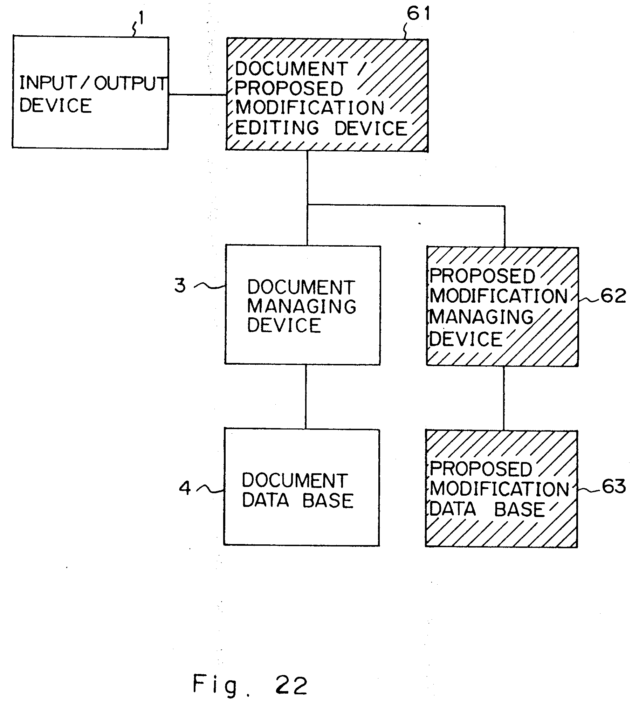

Figure 22 shows the configuration of the fifth embodiment of the present invention. In Figure 22, the parts shown in the preceding drawings are assigned corresponding numbers. In the fifth embodiment shown in Figure 22, a plurality of modification editions are managed by a subsystem to accept a user's request in each modification edition.

A document/proposed modification editing device 61 applies a user's editing information through the input/output device 1 to generate a document. The document comprises a plurality of segments. For example, each chapter corresponds to a node. The document is stored in the buffer of the document/proposed modification editing device 61 during the editing operation. When the editing is completed, it stores the edited document in the document data base 4 through the document managing device 3.

In the fifth embodiment of the present invention, the input/output device 1, document managing device 3, and document data base 4 are the same as those of the conventional device, but can be of the fourth embodiment.

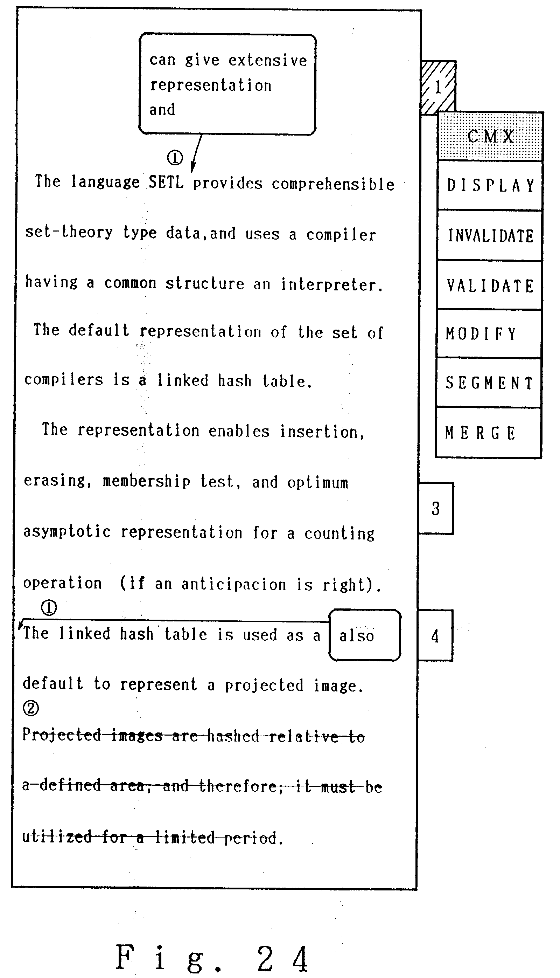

The fifth embodiment stores the information about what part of a plurality of target documents are to be modified or edited in modification units and how to process them. The user instructs on a menu how to amend the modification unit and admit each modification. Portions to be modified are overwritten in a different color, for example, red, to allow a user to easily identify the modified portions, and the modification unit numbers are added as shown in Figure 19. To give the user instructions to the display device, the user clicks a mouse button with the mouse cursor positioned on a tag indicating the modification unit. When the button is clicked, a menu is displayed as shown in Figure 24. The user selects a desired item on the displayed menu.

The detailed explanation of the operations of the above described devices are given as follows. When a document is edited and an administrator of authors checks and further modifies the edited document, all the information is applied from the input/output device to the document/proposed modification editing device 61. The document/proposed modification editing device 61 performs a modifying operation independent of a document editing operation.

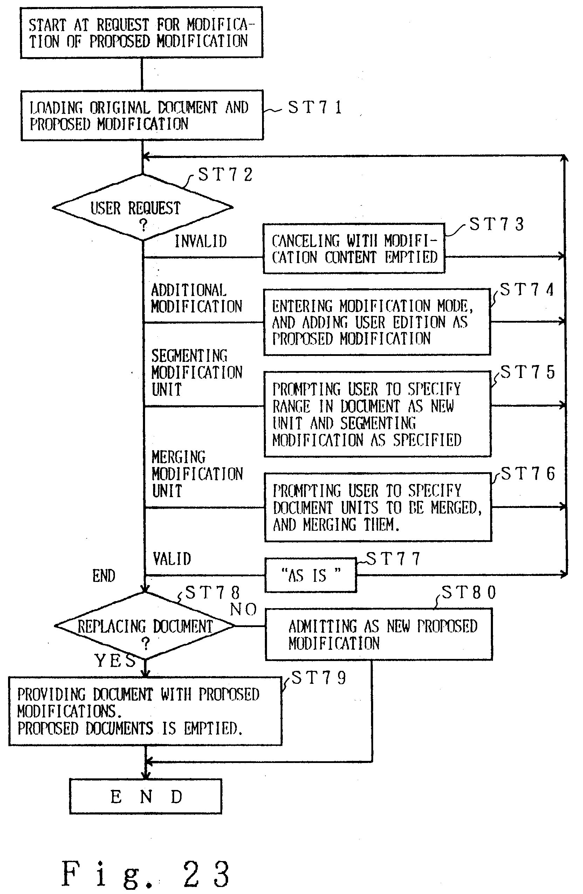

Figure 23 is a flowchart for explaining the operation of the document/proposed modification editing device 61 of the fifth embodiment of the present invention. If an editing operation starts at a request for modifications according to a proposed modification, a target original document is read from the document data base 4 and loaded in the internal buffer through the document managing device 3. Proposed modifications are read from a proposed modification data base 63 and stored in the different area of the internal buffer through a proposed modification managing device 62. Then, the original document and the proposed modifications are displayed. For example, an original document and proposed modification (in the format shown in Figure 5) are loaded and internally (in a memory) put in a table in modification units (according to the assigned serial numbers). Memorandum portions (memo) and command portions are grouped in the table. According to the additional information (difference of a document modification), the document is presented with both the original document and modifications displayed together. In step ST 72, an object of a user-specified command is determined. When input is omitted, the determination instructs to wait until it is provided.

When an inputted user command is invalid, the content of the modifications stored in the buffer are canceled in step ST 73. That is, user-specified information in modification units are deleted from the table. Simultaneously, a document section is displayed corresponding to the change in additional information. In this case, an editing symbol is not indicated. If the modifications are admitted or they are further modified, the device is switched to the modification mode in step ST 74. Thus, all the proposed modifications inputted by a user through the input/output device 1 are admitted. For example, the edited portions to be added by a user as differences in the future are added after the command portion in a specified modification unit. Simultaneously, a document section is displayed corresponding to the change in additional information. If each modification unit should be sorted, the user is prompted to specify the range of a new modification unit in the document in step ST 75. The specified range can be established as a new modification unit. For example, a user specifies what portion indicated by a specified editing symbol should be segmented, and the corresponding command portion is segmented. The number of a modification unit of additional information is increased by 1, and can be renumbered if necessary. Simultaneously, a document section is displayed corresponding to the change in additional information. If modification units are merged, the user is prompted to specify the units to be merged, thus merging the specified proposed modifications in step ST 76. That is, a memorandum and command of a specified modification unit are merged. The number of a modification unit must be the smallest possible value. Simultaneously, a document section is displayed corresponding to the change in additional information. The current document can be retained if it should be (in step ST 77).

The above described invalidation, modification, separation, merging, sorting, and retention are represented as an operation of each command issued in response to each of proposed modifications. Each command demands target information according to the operation information provided by the input/output device 1. When the processes in steps ST 73 - ST 77 are completed, the device waits for a user command.

Figure 24 shows an example of a proposed modification. It is displayed when a mouse cursor indicates "1" representing a node. At this time, a command menu CMX is displayed, according to which the user specifies a desired item to input a command.

When the input of commands is completed, the user is inquired as to whether or not the modified document is replaced in step ST 78, and determines the instruction issued in response to the inquiry. If the document must be replaced (yes), the proposed modifications are applied to the document. As the document is replaced with proposed modifications, it is displayed as a modified document, thus requiring no further modifications. Therefore, the buffer for the proposed modifications are emptied, and the modified document is stored in the document data base 4 through the document managing device 3.

If the document is not replaced (no) in step ST 78, the new proposed modifications made using each command are stored in the proposed modification data base 63 through the proposed modification managing device 62 in step ST 80. The processes in steps ST 79 and 80 are executed when the preceding processes are completed, thereby terminating all the processes according to modification requests.

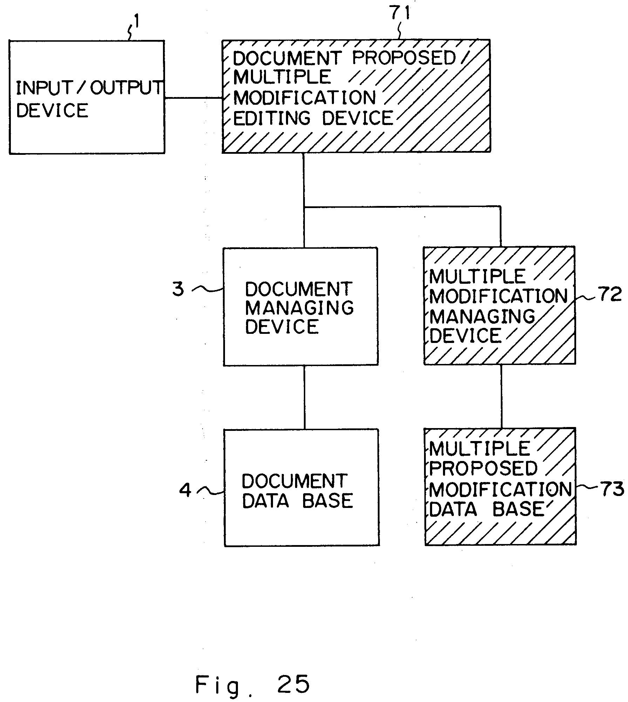

Figure 25 shows the configuration of the sixth embodiment of the present invention. In the fifth embodiment of the present invention, a request is accepted in a modification unit. In the sixth embodiment of the present invention shown in Figure 25, a user request is accepted for each modification of proposed modifications. In each modification unit, different modifications to be made on the same representation is checked.

A document/multiple proposed modification editing device 71 receives editing information from a user through the input device 1 to generate a document. The document comprises a plurality of document sections. That is, a chapter corresponds to a node. The document is stored in the buffer of the document/multiple proposed modification editing device 61 during the operation of editing the document. For example, when the editing is completed, the edited document is stored in the document data base 4 through the document managing device. In the sixth embodiment of the present invention, the input/output device 1, document managing device 3, and document data base are the same as those of the conventional device. The configuration can be the same as that of the fourth embodiment.

When a document is edited, that is, a plurality of reviewers of authors individually check and modify the completed document, the modification information is applied from the input/output device 1 to a document layer/multiple proposed modification editing device 71. The document layer/multiple proposed modification editing device 71 performs modifications independent of a document editing process. The modifications are made by a checker of a document with the input/output device 1. The modifications do not have to be made simultaneously, and can be made individually. That is, a document can be checked by a plurality of persons. Proposed modifications are stored for each person in each buffer of the document/proposed modification editing device 71.

The proposed modifications are individually stored in each buffer corresponding to a person who checks and modifies document. When modification is completed, the modified document is individually stored for each person in a multiple proposed modification data base through the multiple modification managing device 72. That is, the proposed modifications comprise information about what part of a plurality of target document sections are to be modified or edited and how to process them. A plurality of proposed modifications can be simultaneously processed by loading a plurality of proposed modifications. A modification unit determined by a user as "valid" is retained as an admitted modification, but is otherwise deleted. A plurality of user-specified proposed modifications are loaded into the processor. The loaded proposed modification information is individually managed and displayed through a different window. Only the information in a user-specified modification unit is copied to the admitted modification information managed individually. Otherwise, a user selects information from different proposed modification information groups, although the proposed modifications are individually managed and displayed through a window likewise. The proposed modifications can be displayed corresponding to a modifier as described later.

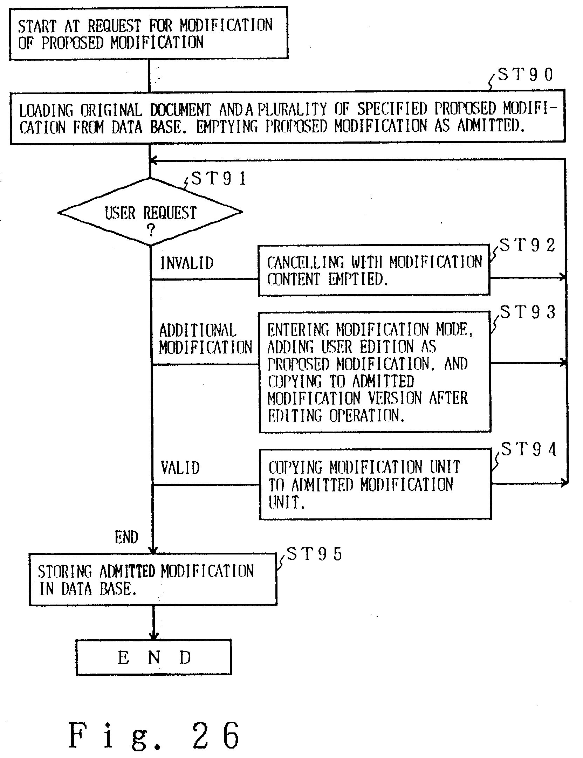

Figure 26 is a flowchart for explaining the proposed modification inputting operation of the document/multiple proposed modification editing device 71.

When a modification request is applied, the original document and a plurality of specified proposed modifications are loaded from the data base, and the previously admitted proposed modifications are erased in step ST 90.

The proposed modifications are loaded in step ST 71 of the above described fifth embodiment. However, in the sixth embodiment, they are cleared. Following the process in step ST 90, determination is made as to what the user command request instructs in step ST 91. If nothing is inputted, the determination must wait until any input is applied.

When the inputted user command is invalid, the area of admitted modifications in the buffer of the document/multiple proposed modification editing device 71 is emptied in step ST 92. When modifications are valid, the device is set to the modification mode in step ST 93, and the user's edition is added. After the modification, the modified document is copied to the admitted modification area. That is, the modified document is stored as a proposed modification in the multiple proposed modification data base 73.

If a user request is valid, the modification unit is copied to the admitted modification area in step ST 94.

Final proposed modifications are generated by sequentially executing the above described invalidate, modify, and validate commands. According to each request, the proposed modifications are determined to be admitted modifications, and the admitted modifications are stored in the data base in step ST 95 when the process is terminated.

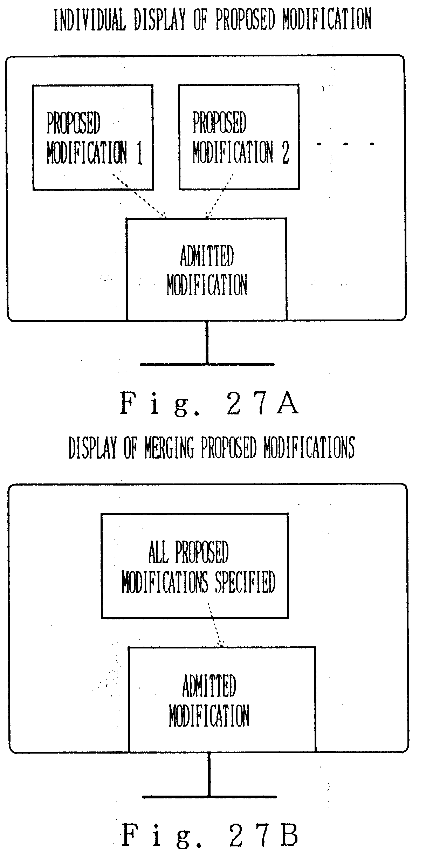

In the sixth embodiment of the present invention, two buffers are provided for storing proposed modifications and admitted modifications separately. Therefore, as shown in Figure 27A, when the proposed modifications read from the data base are displayed through a proposed modification window and determined as admitted modifications, they are displayed through an admitted modification window. For example, as shown in Figure 27B, when proposed modifications are modified and merged, the merged document section is determined to be an admitted modification. All these proposed and admitted modifications are displayed in window display units.

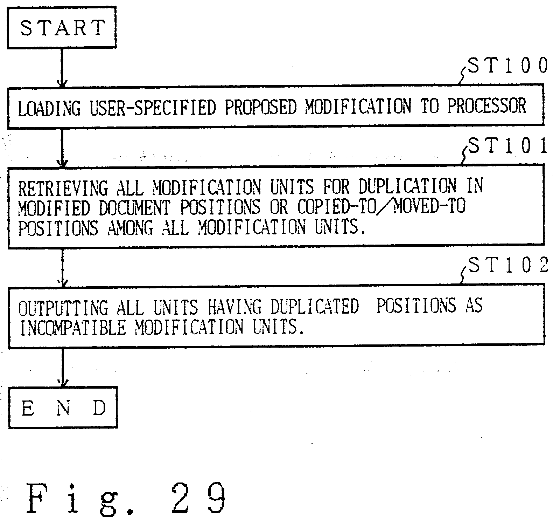

In the fifth and sixth embodiments, a plurality of proposed modifications may be incompatible with one another. Specifically, this often arises when a plurality of persons individually generate proposed modifications. To avoid this incompatibility, in the sixth embodiment, determination is made as to whether or not there is incompatibility when a proposed modification is loaded. Figure 29 is a flowchart for explaining how to detect a modification unit that is incompatible with others. This flowchart is processed when a proposed modification is loaded or when it is inputted by an operator. When the process is started, a user-specified proposed modification is read in step ST 100. In step ST 101, duplication in the position of document modification or its copied-to/moved-to position is detected among all modification units. If the duplication is detected, the combination of the corresponding portions are outputted as an incompatible modification unit, thus terminating the process.

By performing the above described process, the final checker of the document merges all the proposed modifications to generate a final document. Incompatible portions are eliminated through the above described processes, thus simplifying the final document editing operation.

The above described checks are not made when proposed modifications are merged, but when each of the proposed modification is inputted. Checks are made for the whole document. In the present invention, identical processes are performed when a plurality of proposed modifications are merged.

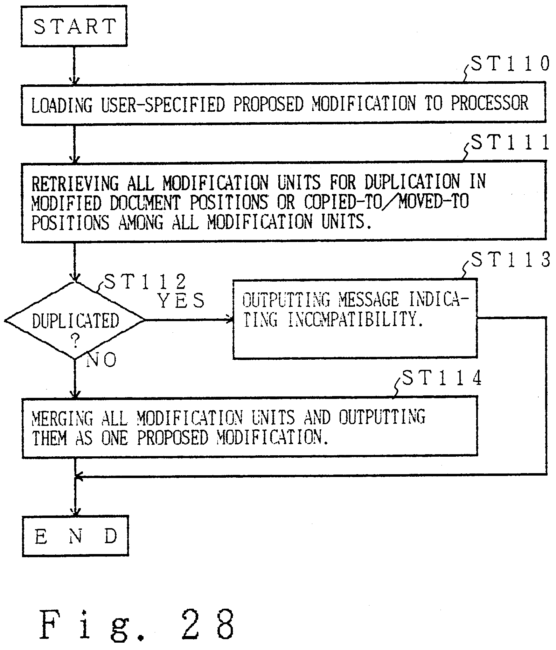

Figure 28 is a flowchart of the above described processes. When a plurality of proposed modifications are merged, a user-specified proposed modification is loaded to a processor in step ST 110. In step ST 111, duplication in the position of document modification of its copied-to/moved-to position is detected in step ST 111 among all modification units.

When proposed modifications are merged, the incompatibility is detected in only those to be merged.

Then, determination is made in step ST 112 as to whether or not duplication exists. If it does (yes), a message is outputted in step ST 113 to inform of the incompatibility. If it does not, all modification units are merged and outputted as a proposed modification in step ST 114. According to the above described merging process, a proposed modification can be finally obtained.

Moreover, in the present invention, proposed modifications can be admitted or deleted in modification units without re-entry or re-editing after the generated document is modified covering a plurality of document sections, and can be automatically processed with a check for incompatibility.

## Claims

1. A document processor for storing a plurality of generated documents in an actual file, associating any of said document sections with one another and displaying them, and editing said document sections, comprising:

    a control means for managing, when a document is generated by merging a plurality of document sections in one document, a name of a file in which said document is stored and the file area in which each document section is stored, and for managing, when a document is generated by merging document sections in a plurality of documents, names of files in which said document sections are stored and the file area in which each document section is stored; and

    a display control means for merging and displaying said document sections on a display after reading said document sections to be displayed from said actual file according to the managing data of said managing means.

2. A document processor according to Claim 1 further comprising:

    a segment information detecting means for character-analyzing a document stored in said actual file and detecting the position of a segmentation word for indicating the segmentation of a document; and

    a registering means for setting a document area segmented by said segmentation word detected by said segment information detecting means, said document area being referred to as a document section unit which can be registered to said managing means.

3. A document processor according to Claim 1 further comprising:

a citation information detecting means for detecting the position of a citation word for indicating the citation to a document section described in a document by character-analyzing said document stored in said actual file; and

a second registering means for registering to said managing means the correspondence between the file name and file area in which a citation word detected by said citation information detecting means is stored and an identification name of said managing means for managing a document section pointed by said citation word as a document section to be displayed.

4. A document processor for storing a plurality of generated documents in an actual file, associating any of said document sections with one another and displaying them, and editing said document sections, comprising:

a managing means for managing a name of a file in which document sections to be displayed are stored, the file area in which said document sections are stored, a name of a file in which one or more called documents are stored, a called document section as a document section to be displayed, and the correspondence between identification names of the documents to be displayed;

a selecting means for selecting one or more calling documents managed by said managing means; and

a display means for reading a document section to be displayed from said actual file according to the managing data of said managing means, showing said document section on said display, and reading from said actual file according to the managing data of said managing means a called document specified by said selecting means to display said document on said display while retaining the correspondence to a calling document.

5. A document processor according to Claim 4, wherein

said actual file stores a program; and

said managing means manages said program by its name as a called part, reads a called program specified by said selecting means from said actual file according to the managing data, and executes said program.

6. A document processor according to Claim 4 further comprising:

a segment information detecting means for character-analyzing a document stored in said actual file and detecting the position of a segmentation word for indicating the segmentation of a document; and

a registering means for setting a document area segmented by said segmentation word detected by said segment information detecting means, said document area being referred to as a document section unit which can be registered to said managing means.

7. A document processor according to Claim 4 further comprising:

a citation information detecting means for detecting the position of a citation word for indicating the citation to a document section described in a document by character-analyzing said document stored in said actual file;

a second registering means for registering to said managing means the correspondence between the file name and file area in which a citation word detected by said citation information detecting means is stored and an identification name of said managing means for managing a document section pointed by said citation word as a document section to be displayed.

8. A document processor for managing and displaying an edited document generated from one or more original documents comprising:

one or more managing means provided for each original document for registering and managing editing information provided for one or more original documents;

a control means for grouping said managing means for registering and managing data when a document is generated by an identical editing operation performed on the original document;

a selecting means for selecting one or more identifiers from among identifiers assigned by said control means; and

a second display control means for reading editing information managed by said managing means specified by an identifier selected by said selecting means, and showing the edited document sections specified by the read editing information together with the original document.

9. A document processor according to Claim 8, wherein

said display control means displays an edited document together with both the original document and modifications.

10. A document processor according to Claim 8 further comprising:

a selecting means for selecting either an original document or both said original document and the edited document overwritten to said original document; wherein

said display control means displays an original document or both an original document and the edited document overwritten to said original document.

11. A document processor according to Claims 10, wherein

said display control means displays an edited document with both the original document and modifications.

12. A document processor for managing and displaying memoranda added to one or more documents comprising:

one or more managing means provided for each document for registering and managing memoranda inputted by an editing processor together with memorandum position information;

a control means for grouping said managing means for registering and managing data when a document is generated by an identical editing operation performed on the original document, and for assigning to said groups an identifier indicating the addition of a memorandum;

a selecting means for selecting one or more identifiers from among said identifiers assigned by said control means; and

a display control means for reading memorandum information managed by said managing means specified by an identifier selected by said selecting means, and for showing on said display memoranda specified by said read memorandum information together with the edited document.

13. A document processor according to Claim 12, wherein

said managing means registers and manages memoranda added to the edited document together with memorandum position information, and reads and displays on a display after reading from said managing means memoranda to be added to said edited document when said edited document is shown on said display.

14. A document processor comprising:

a program executing means for executing a program provided corresponding to a document;

a selecting means for selecting a plurality of document sections to be processed in the execution of a program by said executing means;

one or more managing means provided for each document selected by said selecting means for registering and managing data process result information of said program corresponding to said document when said program is activated; and

a display control means for showing on a display the data process result information managed by said managing means corresponding to a document.

15. A document processor comprising:

an editing means for editing a document;

a plurality of modifying means individually provided for each of a plurality of functions for instructing the editing means to modify the document;

a managing means for managing a plurality of modifications as a modification unit covering a plurality of document sections edited by said plurality of modifying means; and

an altering means for further applying modifying means separately for each modification unit managed by said managing means.

16. A document processor according to Claim 15, wherein

said altering means cancels said modifications separately for each of said modification units.

17. A document processor comprising:

an editing means for editing a document;

a plurality of modifying means individually provided for each of a plurality of functions for instructing the editing means to modify the document;

a managing means for managing a plurality of modifications as a modification unit covering a plurality of document sections edited by said plurality of modifying means; and

an altering means for adding said modification unit to other portions in the document.

18. A document processor comprising:

an editing means for editing a document;

a plurality of modifying means individually provided for each of a plurality of functions for instructing the editing means to modify the document;

a managing means for managing a plurality of modifications as a modification unit covering a plurality of document sections edited by said plurality of modifying means; and

an altering means for segmenting said modification unit to a plurality of segments.

19. A document processor comprising:

an editing means for editing a document;

a plurality of modifying means individually provided for each of a plurality of functions for instructing the editing means to modify the document;

a managing means for managing a plurality of modifications as a modification unit covering a plurality of document sections edited by said plurality of modifying means; and

an altering means for merging said modification unit to one modification unit.

20. A document processor comprising:

an editing means for editing a document;

a plurality of modifying means individually provided for each of a plurality of functions for instructing the editing means to modify the document;

a managing means for managing a plurality of modifications as a modification unit covering a plurality of document sections edited by said plurality of modifying means; and

a display means for displaying a modification unit managed by said managing means by displaying the modification content in a modification unit at the upper part of the currently displayed original document.

21. A document processor comprising:

an editing means for editing a document;

a plurality of modifying means separately provided for each function for instructing said editing means to modify the document;

a managing means, assuming a modification covering a plurality of documents as a modification unit, for managing a plurality of proposed modifications in multiple modification units associated with an original document using a plurality of said modifying means; and

a merging means for selecting and merging modification units in a plurality of said proposed modifications or selecting at least one of them to generate a new proposed modification.

22. A document processor comprising:

an editing means for editing a document;

a plurality of modifying means separately provided for each function for instructing said editing means to modify the document;

a managing means, assuming a modification covering a plurality of documents as a modification unit, for managing a plurality of proposed modifications in multiple modification units associated with an original document using a plurality of said modifying means; and

a window displaying means for displaying a plurality of said proposed modifications separately through each window.

23. A document processor comprising:

an editing means for editing a document;

a plurality of modifying means separately provided for each function for instructing said editing means to modify the document;

a managing means, assuming a modification covering a plurality of documents as a modification unit, for managing a plurality of proposed modifications in multiple modification units associated with an original document using a plurality of said modifying means; and

a retrieving means for retrieving incompatible modifications in modification units among a plurality of said proposed modifications.

Fig. 1

USER DOCUMENT | MAPPING LAYER | ACTUAL DOCUMENT

NODE A

CONTENT DEFINITION

DOCUMENT

FILE DEFINITION

CHAPTER 1

B

C

LINK

LINK

B

C

FILE DEFINITION

CHAPTER 2

NODE B

MAPPING DEFINITION

CHAPTER 3

NODE C

SEGMENT →

NODE DEFINITION

EP 0 497 283 A2

Fig. 2

Fig. 3

Fig. 4

Fig. 5

```
     50              49                51
INPUT          DISPLAY         OUTPUT
DEVICE         DEVICE          DEVICE


     46              48                47
STRUCTURING    VIRTUAL         ADDITIONAL
PROCESSOR      STRUCTURE       INFORMATION
               CONTROLLER      PROCESSOR


     41              43                45
CONVENTIONAL   VIRTUAL         ADDITIONAL
FILE           MANAGING        INFORMATION
MANAGING       DEVICE          MANAGING
DEVICE                         DEVICE


     40              42                44
DOCUMENT       VIRTUAL         ADDITIONAL
FILE           FILE            INFORMATION
                               FILE
```

Fig. 6

```
<node1>
@content {
  @file {"textfile1" }
  Z(1;10)
  Z(20,2;30,2)
}
@map {Z(1,4;1,8)  → N.node2
    . . .
}
<node2>
  . . . .
```

# Fig. 7

Fig. 8

DOCUMENT A

CHAPTER 1 xxx
. . .
CHAPTER 2 xxx

DOCUMENT B

CHAPTER 3 xxx
. . .
(REFERENCE
TO CHAPTER
2 )
. . .

NODE O (CONTENT)

CHAPTER 1 xxx
CHAPTER 2 xxx
CHAPTER 3 xxx

NODE 1

CHAPTER 1
. . .

NODE 2

CHAPTER 2

NODE 3

CHAPTER 3
(REFERENCE
TO CHAPTER
2 )

Fig. 9

START

① ───────────→

ST12
RECEIVING A USER'S COMMAND INSTRUCTION FROM A DISPLAY

ST13
< DETERMINATION>
IF INSTRUCTION IS OVER, PROCESS TERMINATES.

ST14 — DISPLAYING A DOCUMENT

SPECIFYING MAPPING(LINK).  ST18

AUTOMATIC STRUCTURING IS SPECIFIED

SPECIFYING A DISPLAY OF ADDITIONAL INFORMATION

OBTAINING A CORRESPONDING VIRTUAL FILE FROM VIRTUAL FILE MANAGING DEVICE USING DOCUMENT NAME AS A KEY.

CORRESPONDING MAPPING DEFINITION IS RETRIEVED ACCORDING TO POSITION SPECIFIED BY USER'S MOUSE CLICK.
IF A PLURALITY OF CORRESPONDING MAPPING DEFINITIONS EXIST, THEY ARE DISPLAYED ON MENU SO THAT USER CAN SELECT ONE

ST15
FILE CONTENT IS CONVERTED TO FORMAT OF CONTENT DEFINITION AND MAPPING DEFINITION FIRST NODE NAME IS SELECTED TO BE DISPLAY

< DETERMINATION : MAPPING DESTINATION >
ST19

NODE    ST21    PROGRAM

NODE NAME IS RETRIEVED FROM SEGMENT-NODE DEFINITION IN MAPPING DEFINITION AND ADMITTED AS OBJECT TO BE DISPLAYED.

PROGRAM IS EXECUTED.
(EXECUTION RESULT IS INDICATED)

ST22
PROCESSES OF FIGURE 6 ARE CONDUCTED

ST23
<DETERMINATION>

FILE SPECIFIED BY FILE DEFINITION OF SPECIFIED NODE IS READ FROM CONVENTIONAL FILE MANAGING DEVICE.
A DOCUMENT IS GENERATED AND STORED INTERNALLY IN A BUFFER BY MERGING AREA DEFINITIONS OF FILE.   ST16

ST20

DISPLAY    STOPPING DISPLAY    GENARATION

ST24 —

ADDITIONAL INFORMATION REGISTERED CORRESPONDING TO DOCUMENT NAME IS OBTAINED FROM ADDITIONAL INFORMATION PROCESSOR, AND DISPLAYED IN A NODE UNIT.

DISPLAY OF ADDITIONAL INFORMATION IS STOPPED

ST25

PROCESSES OF FIGURE 12 ARE CONDUCTED

ST26

CONTENT OF BUFFER IS SENT TO DISPLAY, AND IS DISPLAYED THROUGH A NEWLY GENERATED WINDOW    ST17

TO ①

☐ : A DOUBLE FRAME CONTAINS DESCRIPTION OF PROCESS BY STRUCTURING DEVICE

☐ : A SINGLE FRAME CONTAINS DESCRIPTION OF PROCESS BY VIRTUAL STRUCTURE CONTROLLER

Fig. 10

START

<DETERMINATION > ST28

RETRIEVAL          REGISTRATION

ST29          ST30

| RERTRIEVING FILE SPECIFIED BY FIGURE 5 AND SENDING IT TO VIRTUAL STRUCTURE CONTROLLER 48 | FILE RECEIVED FROM STRUCTURING PRO- CESSOR 46 AND SHOWN IN FIGURE 5 CORRESPONDS TO SPECIFIED DOCUMENT NAME AND IS REGISTERED. |

E N D

# Fig. 11

START

/ST31
<DETERMINATION>

RETRIEVAL                    REGISTRATION

/ST32                    /ST33

| IN RESPONSE TO DESIGNATED DOCU-MENT NAME, FILE SHOWN IN FIGURE 13 IS RETRIEVED AND SENT TO VIR-TUAL STRUCTURE CONTROLLER 48. | FILE SENT FROM ADDITIONAL INFOR-MATION MANAGING DEVICE 47 AND SHOWN IN FIGURE 3 CORRESPONDS TO SPECIFIED DOCUMENT NAME AND IS REGISTERED. |

END

# Fig. 12

START

ST34

RETRIEVING MAPPING DEFINITION
SPECIFIED ACCORDING TO DOCUMENT
SECTION POSITION INDICATED BY
USER'S MOUSE CLICK

ST35

"MAPPING
DEFINITION" IS RETRIEVED
?

NO

YES

ST36

NUMBER OF
DETECTED DEFINITION IS
"1" ?

YES

NO

ST37

USER SELECTS ONE FROM MENU
INDICATING CONTENT OF MAPPING
DEFINITIONS

ST38

ACTION
INDICATES EXECUTING
PROGRAM ?

NO

YES

ST39

EXECUTING PROGRAM AS
SELECTED ACTION

ST40

DISPLAYING LINK
DESTINATION NODE

END

Fig. 13

31

Fig. 14

EP 0 497 283 A2

```
1 {node:

    memo { "MEMORANDA "

           POINT OR AREA DESIGNATION

         }

    cmd  {

           D   AREA DESIGNATION

           I   POINT DESIGNATION    DOCUMENT

           M   AREA DESIGNATION   POINT DESIGNATION

           C   AREA DESIGNATION   POINT DESIGNATION

            }

      }


2  . . .  (SAME AS ABOVE )


3  . . .
```

F i g .  1 5

START

ST42

STORING USER-SPECIFIED NODE AND SEQUENCE

ST43

USER-SPECIFIED AREA DESIGNATION / POINT
DESIGNATION IS STORED

ST44

GENERATING DOCUMENT
?

YES

NO

ST45

STORING USER-INPUTTED
MEMORANDA.

ST46

A

ST47

YES

GENERATION IS CONTINUED
?

NO

ST48

STORING ADDITIONAL INFORMATION CELL
IN ADDITIONAL INFORMATION FILE

E N D

F i g. 1 6

EP 0 497 283 A2

Fig. 17

NODE　　　　MEMO

DOCUMENT

ADDITIONAL
INFORMATION CELL

| ADDITIONAL<br>INFORMATION<br>NUMBER |
| --- |
| NODE NAME |
| MEMO |
| EDITING COMMAND 1<br><br>EDITING COMMAND 2 |

ADDITIONAL
INFORMATION CELL

| ADDITIONAL<br>INFORMATION<br>NUMBER |
| --- |
| NODE NAME |
| MEMO |
| EDITING COMMAND 1<br><br>EDITING COMMAND 2 |

Fig. 18

can give extensive
representation
and

① 

The language SETL provides comprehensible

set-theory type data, and uses a compiler

having a common structure an interpreter.

1

The default representation of the set of

compilers is a linked hash table.

2

The representation enables insertion,

erasing, membership test, and optimum

3

asymptotic representation for a counting

4

operation (if an anticipacion is right).
① 

The linked hash table is used as a   also

default to represent a projected image.
②
~~Projected images are hashed relative to~~

~~a defined area, and therefore, it must be~~

~~utilized for a limited period.~~

F i g . 1 9

The language SETL can give extensive
representation and provides comprehensible
set-theory type data,and uses a compiler
having a common structure an interpreter.

The default representation of the set of
compilers is a linked hash table.

The representation enables insertion,
erasing, membership test, and optimum
asymptotic representation for a counting
operation (if an anticipacion is right).

Also the linked hash table is used as a
default to represent a projected image.
Projected images are hashed relative to
a defined area, and therefore, it must be
utilized for a limited period.

| 1 |
| 2 |
| 3 |
| 4 |

| EDITING | ⇐ |
|---------|
| UNDO |
| BEFORE |
| AFTER |

# F i g. 2 0

```
            ┌─────────────┐
            │    START    │
            └──────┬──────┘
                   │
    ┌──────────────────────────────┐
    │ EXECUTING SPECIFIED RETRIEVING│  ⟋ S T 6 0
    │ PROGRAM FOR A PLURALITY OF    │
    │ DOCUMENTS                     │
    └──────────────┬───────────────┘
                   │
    ┌──────────────────────────────┐
    │ CONVERTING DOCUMENT POSITION  │  ⟋ S T 6 1
    │ IN RETRIEVAL RESULT OBTAINED  │
    │ BY RETRIEVING PROGRAM TO AREA │
    │ DESIGNATION DATA FORMAT       │
    └──────────────┬───────────────┘
                   │
    ┌──────────────────────────────┐
    │ SORTING AREA DESIGNATION DATA │  ⟋ S T 6 2
    │ BY NODE,GENERATING NODE NAME, │
    │ ADDITIONAL INFORMATION NUMBER │
    │ AND AREA DESIGNATION ; AND    │
    │ OUTPUTTING TO ADDITIONAL      │
    │ INFORMATION FILE              │
    └──────────────┬───────────────┘
                   │
            ┌──────────────┐
            │   E  N  D    │
            └──────────────┘
```

# F i g .  2 1

Fig. 22

START AT REQUEST FOR MODIFICA-
TION OF PROPOSED MODIFICATION

LOADING ORIGINAL DOCUMENT AND
PROPOSED MODIFICATION — ST71

ST72

USER REQUEST
?

INVALID — CANCELING WITH MODIFI-
CATION CONTENT EMPTIED — ST73

ADDITIONAL
MODIFICATION — ENTERING MODIFICATION MODE,
AND ADDING USER EDITION AS
PROPOSED MODIFICATION — ST74

SEGMENTING
MODIFICATION
UNIT — PROMPTING USER TO SPECIFY
RANGE IN DOCUMENT AS NEW
UNIT AND SEGMENTING
MODIFICATION AS SPECIFIED — ST75

MERGING
MODIFICATION
UNIT — PROMPTING USER TO SPECIFY
DOCUMENT UNITS TO BE MERGED,
AND MERGING THEM. — ST76

VALID — "AS IS" — ST77

END

ST78

NO — ADMITTING AS NEW PROPOSED
MODIFICATION — ST80

REPLACING DOCUMENT
?

YES

PROVIDING DOCUMENT WITH PROPOSED
MODIFICATIONS.
PROPOSED DOCUMENTS IS EMPTIED. — ST79

E N D

Fig. 23

can give extensive
representation
and

①

The language SETL provides comprehensible

set-theory type data,and uses a compiler

having a common structure an interpreter.

The default representation of the set of

compilers is a linked hash table.

The representation enables insertion,

erasing, membership test, and optimum

asymptotic representation for a counting

operation  (if an anticipacion is right).
①

The linked hash table is used as a | also |

default to represent a projected image.
②
~~Projected images are hashed relative to~~

~~a defined area, and therefore, it must be~~

~~utilized for a limited period.~~

CMX

DISPLAY

INVALIDATE

VALIDATE

MODIFY

SEGMENT

MERGE

1

3

4

F i g.  2 4

Fig. 25

START AT REQUEST FOR MODIFICATION
OF PROPOSED MODIFICATION

ST90

LOADING ORIGINAL DOCUMENT AND A PLURALITY OF SPECIFIED PROPOSED MODIFI-
CATION FROM DATA BASE. EMPTYING PROPOSED MODIFICATION AS ADMITTED.

ST91

USER REQUEST
?

INVALID

ST92

CANCELLING WITH MODIFICATION
CONTENT EMPTIED.

ADDITIONAL
MODIFICATION

ST93

ENTERING MODIFICATION MODE,
ADDING USER EDITION AS
PROPOSED MODIFICATION. AND
COPYING TO ADMITTED
MODIFICATION VERSION AFTER
EDITING OPERATION.

VALID

ST94

COPYING MODIFICATION UNIT
TO ADMITTED MODIFICATION
UNIT.

END

ST95

STORING ADMITTED MODIFICATION
IN DATA BASE.

E N D

Fig. 26

INDIVIDUAL DISPLAY OF PROPOSED MODIFICATION

PROPOSED
MODIFICATION 1

PROPOSED
MODIFICATION 2

. . .

ADMITTED
MODIFICATION

F i g . 2 7 A

DISPLAY OF MERGING PROPOSED MODIFICATIONS

ALL PROPOSED
MODIFICATIONS SPECIFIED

ADMITTED
MODIFICATION

F i g . 2 7 B

```
                        ┌─────────────┐
                        │  START      │
                        └─────────────┘
                               │                        ST110
        ┌──────────────────────┴────────────────────────────────┐
        │ LOADING USER-SPECIFIED PROPOSED MODIFICATION TO PROCESSOR │
        └────────────────────────┬──────────────────────────────┘
                                 │                      ST111
        ┌────────────────────────┴──────────────────────────────┐
        │ RETRIEVING ALL MODIFICATION UNITS FOR DUPLICATION IN    │
        │ MODIFIED DOCUMENT POSITIONS OR COPIED-TO/MOVED-TO       │
        │ POSITIONS AMONG ALL MODIFICATION UNITS.                 │
        └────────────────────────┬──────────────────────────────┘
                                 │                              ST113
                            ST112               ┌──────────────────────────┐
                        ◇          YES          │ OUTPUTTING MESSAGE INDICA-│
                 DUPLICATED  ───────────────────▶│ TING INCOMPATIBILITY.     │
                        ◇                        └──────────────────────────┘
                          ? │ NO
                            │                         ST114
        ┌───────────────────┴──────────────────────┐
        │ MERGING ALL MODIFICATION UNITS AND OUTPUTTING │
        │ THEM AS ONE PROPOSED MODIFICATION.          │
        └───────────────────┬──────────────────────┘
                            │
                        ┌──────────┐
                        │  E N D   │
                        └──────────┘
```

Fig. 28

EP 0 497 283 A2

```
┌─────────────┐
│  S T A R T  │
└─────────────┘
       │
       │                                              ST100
       ▼
┌──────────────────────────────────────────────────────────────┐
│ LOADING USER-SPECIFIED PROPOSED MODIFICATION TO PROCESSOR      │
└──────────────────────────────────────────────────────────────┘
       │                                              ST101
       ▼
┌──────────────────────────────────────────────────────────────┐
│ RETRIEVING ALL MODIFICATION UNITS FOR DUPLICATION IN          │
│ MODIFIED DOCUMENT POSITIONS OR COPIED-TO/MOVED-TO             │
│ POSITIONS AMONG ALL MODIFICATION UNITS.                       │
└──────────────────────────────────────────────────────────────┘
       │                                              ST102
       ▼
┌──────────────────────────────────────────────────────────────┐
│ OUTPUTTING ALL UNITS HAVING DUPLICATED  POSITIONS AS          │
│ INCOMPATIBLE MODIFICATION UNITS.                              │
└──────────────────────────────────────────────────────────────┘
       │
       ▼
┌─────────────┐
│  E  N  D    │
└─────────────┘
```

Fig. 29